# EUROPEAN PATENT SPECIFICATION

(11) **EP 3 693 915 B1**
(45) Date of publication and mention of the grant of the patent: **27.05.2026**
(21) Application number: 19877531.4
(22) Date of filing: 09.10.2019
(51) Int. Cl.: G06Q 30/0601

(54) **METHOD FOR CONTROLLING USER DATA AND RELATED DEVICE**
VERFAHREN ZUR STEUERUNG VON BENUTZERDATEN UND ZUGEHÖRIGE VORRICHTUNG
PROCÉDÉ DE GESTION DE DONNÉES UTILISATEUR ET DISPOSITIF ASSOCIÉ

(30) Priority: 13.11.2018 CN 201811347521
(43) Date of publication of application: 12.08.2020
(73) Proprietor: Huawei Technologies Co., Ltd., Shenzhen, Guangdong 518129 (CN)
(72) Inventor: FU, Mouzheng, Shenzhen Guangdong 518129 (CN)
(74) Representative: Gill Jennings & Every LLP
(86) International application number: PCT/CN2019/110117
(87) International publication number: WO 2020/098418

(56) References cited:
- WO-A1-2017/027294
- CN-A- 104 637 083
- CN-A- 106 097 081
- CN-A- 106 097 081
- CN-A- 107 563 875
- CN-A- 109 615 462
- US-A1- 2015 154 453
- US-A1- 2016 275 596
- US-A1- 2017 039 775
- US-A1- 2017 352 091

## Description

### TECHNICAL FIELD

This application relates to methods for controlling user data and the field of terminals, and in particular, to a method for controlling user data and a related apparatus.

### BACKGROUND

With the development of network technologies, online shopping matures day by day, and more people purchase required commodities online. When doing the online shopping, a user cannot really see or touch a commodity.

When a user purchases a clothes-type commodity, the user usually has a try-on requirement, and wants to intuitively know an actual wearing effect through try-on. To meet the try-on requirement of the user and improve online shopping experience of the user, a virtual try-on technology is provided. Through virtual try-on, the user can see an effect of trying on new clothes without actually changing clothes.

The virtual try-on mainly includes two-dimensional (2D) virtual try-on and three-dimensional (3D) virtual try-on, which are briefly described below.

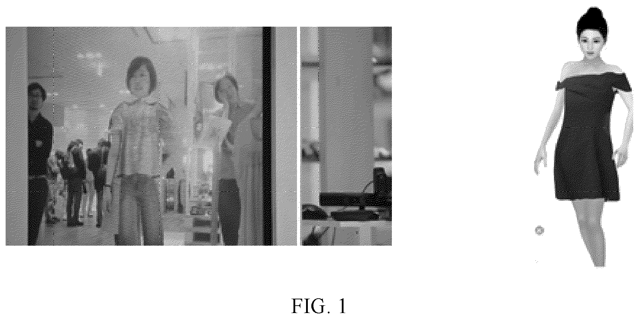

Refer to a left-side drawing of FIG. 1. A 2D image of clothing is obtained during 2D virtual try-on through shooting, drawing, and the like, a video stream of a user is obtained through a camera, and the 2D clothes image is affixed to a body of the user in the video stream through computer graphics processing. Because the clothes image is 2D and lacks stereoscopic impression, the 2D virtual try-on cannot fully reflect an effect of wearing the clothes by the user. For example, a corresponding try-on effect cannot be presented when the user leans to one side or turns round.

Refer to a right-side drawing of FIG. 1. 3D virtual try-on is to use a three-dimensional modeling technology to generate three-dimensional models of a user body and clothing, and then by using an algorithm such as a three-dimensional geometric deformation algorithm or a cloth physical deformation simulation algorithm, to simulate a dressing effect of the body model in a three-dimensional scenario. Because the model and the clothes are three-dimensional, the 3D virtual try-on can fully display the try-on effect of the user.

Therefore, the 3D virtual try-on can provide a real try-on effect for a user, may better meet a try-on requirement of the user, and is a key development direction in the future.

As can be learned from the right-side drawing of FIG. 1, to implement the 3D virtual try-on, usually, a virtual try-on application (application, APP) simultaneously acquires a 3D model of a body of the user and a 3D model of clothes, to show a dressing effect of a body model. However, a user is increasingly aware of protection of personal data or personal privacy and may refuse to provide personal body size data (for example, body data of a sensitive part) to a virtual try-on application, making the virtual try-on difficult to implement. Similarly, considering factors such as intellectual property protection, product competitiveness, and the like, a clothing manufacturer or an electronic commerce platform also has a confidentiality requirement on data of a commodity, and may refuse to provide important commodity data for the virtual try-on application. Consequently, the virtual try-on is difficult to implement.

Therefore, how to protect user data or commodity data in a 3D virtual try-on process is a problem that urgently needs to be resolved at present.

### SUMMARY

This application provides a method for controlling user data and a related apparatus, so that a risk of leaking high-precision user data can be reduced, and security of the high-precision user data can be ensured.

According to a first aspect, this application provides a method for controlling user data, according to claim 1.

In an implementation of the method of the first aspect, the user data is divided into the high-precision user data and the low-precision user data, the high-precision user data is acquired and processed by the second application, and the second application provides only the low-precision user data for the first application to generate the 3D try-on image, thereby reducing a risk of leaking the high-precision user data, and meeting a privacy protection requirement of the user.

In this application, the high-precision user data can almost reflect detail characteristics of all parts of the user body, an information amount is relatively large, and the user usually hopes to ensure security of the high-precision user data. Because the low-precision user data can reflect only a general characteristic of the user body, and the information amount is relatively small, a security requirement of the user on the low-precision user data is relatively low. Therefore, calling of the high-precision user data is stricter than calling of the low-precision user data. The high-precision user data is provided only for an application trusted by the user, and the low-precision user data may be provided for most applications (including the application trusted by the user).

With reference to the first aspect, in some embodiments, the second application is an application developed by a mobile phone manufacturer, and the first application is a third-party application. For example, the first application may be a shopping application such as Taobao, Jingdong, or the like, and the second application may be an AR application developed by the mobile phone manufacturer.

With reference to the first aspect, there may be the following two manners of acquiring the high-precision user data and the low-precision user data of the user by the second application.
(1) In the claimed embodiments, the second application sends a first acquisition request to a second server, and receives the high-precision user data and the low-precision user data of the user sent by the second server.

In the first manner, the first acquisition request may carry identification information of the second application; and the high-precision user data and the low-precision user data of the user are sent by the second server after verification on the identification information of the second application succeeds. A process of verifying the identification information of the second application by the second server is a process of verifying, by the second server, whether the second application is an application trusted by the user, and the process may include that: the second server checks whether prestored application identifiers include an identifier of the second application, and if the prestored application identifiers include the identifier of the second application, the second server determines the second application as the application trusted by the user, that is, verification succeeds. Herein, applications corresponding to the application identifiers prestored by the second server are all applications trusted by the user, and may be set by the second server or the user.

(2) In some non claimed embodiments, the second application receives the high-precision user data of the user sent by a second server, or receives the high-precision user data of the user entered by the user, or reads the high-precision user data of the user detected by an electronic device; and the second application calculates the low-precision user data of the user based on the high-precision user data of the user.

Optionally, the low-precision user data may be obtained by fuzzifying the high-precision user data. For example, some data may be deleted from the high-precision user data to obtain the low-precision user data.

With reference to the first aspect, in some embodiments, before the acquiring, by the second application, size data of a first article provided by the first application, the method further includes: displaying, by the electronic device, an interface of the first application, where the interface includes the first article; and receiving, by the electronic device, an operation of selecting the first article by the user.

With reference to the first aspect, in the claimed embodiments, the 3D try-on image is generated based on the optimal size, the low-precision user data, and effect data of the first article; and the effect data of the first article is provided by the first application, and the effect data reflects a detail of the first article. That is, the 3D try-on image is generated based on the optimal size, the low-precision user data, and the effect data of the first article, and the 3D try-on image may reflect fitness when the user tries on the first article and the detail of the first article.

Specifically, the article in this application may be a commodity. For example, the article in this application may be clothes, trousers, a cap, eyeglasses, or the like. In some embodiments of this application, article data is divided into the size data and the effect data. An article of a same style may have a plurality of pieces of size data, for example, size data respectively corresponding to different sizes. An article of a same style may also have a plurality of pieces of effect data, for example, effect data respectively corresponding to different patterns or different colors.

The size data reflects sizes of all parts of a commodity. In most cases, the size data may be provided for a consumer, so that the consumer may select a proper commodity. However, the effect data is a main difference between an article and another article. To improve competitiveness of a product, a security requirement on the effect data is relatively high. Therefore, calling of the effect data is stricter than calling of the size data. The effect data is provided only for an application trusted by an article provider (for example, a merchant), and the size data may be provided for most applications (including the application trusted by the article provider).

In the claimed embodiments, the first application acquires the size data and the effect data of the first article in the following manner: sending, by the first application, a second acquisition request to a first server, where the second acquisition request carries identification information of the first application; and after verification on the identification information of the first application succeeds, receiving, by the first application, the size data and the effect data of the first article sent by the first server. A process of verifying the identification information of the first application by the first server is a process of verifying, by the first server, whether the first application is an application trusted by the article provider, and the process may include that: the first server checks whether prestored application identifiers include an identifier of the first application, and if the prestored application identifiers include the identifier of the first application, the first server determines the first application as the application trusted by the article provider, that is, verification succeeds. Herein, applications corresponding to the application identifiers prestored by the first server are all applications trusted by the article provider, and may be set by the first server or the user.

With reference to the first aspect, in some embodiments, the method may further include: displaying, by the electronic device, the generated 3D try-on image on the interface of the first application. The user may view, through the 3D try-on image displayed on the electronic device, an effect of trying on the first article by the user, and good shopping experience may be brought to the user.

According to a second aspect, this application provides an electronic device, according to claim 5.

With reference to the second aspect, in some embodiments, the second application is an application developed by a mobile phone manufacturer, and the first application is a third-party application. For example, the first application may be a shopping application such as Taobao, Jingdong, or the like, and the second application may be an AR application developed by the mobile phone manufacturer.

With reference to the second aspect, there may be the following two manners of running, by the processor, the second application to make the electronic device acquire the high-precision user data and the low-precision user data of the user.
(1) In the claimed embodiments, the processor runs the second application to make the electronic device send a first acquisition request to a second server, and receive the high-precision user data and the low-precision user data of the user sent by the second server.

In the first manner, the first acquisition request may carry identification information of the second application; and the high-precision user data and the low-precision user data of the user are sent by the second server after verification on the identification information of the second application succeeds. A process of verifying the identification information of the second application by the second server is a process of verifying, by the second server, whether the second application is an application trusted by the user, and the process may include that: the second server checks whether prestored application identifiers include an identifier of the second application, and if the prestored application identifiers include the identifier of the second application, the second server determines the second application as the application trusted by the user, that is, verification succeeds. Herein, applications corresponding to the application identifiers prestored by the second server are all applications trusted by the user, and may be set by the second server or the user.

(2) In some non claimed embodiments, the processor runs the second application to make the electronic device receive the high-precision user data of the user sent by a second server, or receive the high-precision user data of the user entered by the user, or read the high-precision user data of the user detected by an electronic device; and the second application calculates the low-precision user data of the user based on the high-precision user data of the user.

Optionally, the low-precision user data may be obtained by fuzzifying the high-precision user data. For example, some data may be deleted from the high-precision user data to obtain the low-precision user data.

With reference to the second aspect, in some embodiments, the electronic device further includes a touchscreen, and before the processor runs the second application to make the electronic device acquire the size data of the first article provided by the first application, the processor is further configured to run the first application to make the electronic device perform actions of: displaying, by the touchscreen, an interface of the first application, where the interface includes the first article; and receiving, by the touchscreen, an operation of selecting the first article by the user.

With reference to the second aspect, in the claimed embodiments, the 3D try-on image is generated based on the optimal size, the low-precision user data, and effect data of the first article; and the effect data of the first article is provided by the first application, and the effect data reflects a detail of the first article. That is, the 3D try-on image is generated based on the optimal size, the low-precision user data, and the effect data of the first article, and the 3D try-on image may reflect fitness when the user tries on the first article and the detail of the first article.

In the claimed embodiments, before the processor runs the second application to make the electronic device acquire the size data of the first article provided by the first application, the processor is further configured to run the first application to make the electronic device perform actions of: sending a second acquisition request to a first server, where the second acquisition request carries identification information of the first application; and after verification on the identification information of the first application succeeds, receiving the size data and the effect data of the first article sent by the first server.

With reference to the second aspect, in some embodiments, the electronic device further includes a touchscreen, and the processor is further configured to run the first application to make the electronic device perform an action of displaying, by the touchscreen, the generated 3D try-on image on the interface of the first application.

According to a third non claimed aspect, this application provides a method for controlling user data, where the method is applied to a second server, and the method includes: receiving, by the second server, a first acquisition request sent by a second application, where the second application is installed in an electronic device; and sending, by the second server, high-precision user data and low-precision user data of a user to the second application.

With reference to the third aspect, in some embodiments, the first acquisition request carries identification information of the second application; and the second server sends the high-precision user data and the low-precision user data of the user to the second application after verification on the identification information of the second application succeeds.

According to a fourth non claimed aspect, this application provides a second server, including: one or more processors and one or more memories; the one or more processors are coupled with the one or more processors, and the one or more memories are configured to store computer program code, where the computer program code includes a computer instruction, and when the one or more processors execute the computer instruction, the electronic device performs the method for controlling user data according to the third aspect.

According to a fifth non claimed aspect, this application provides a method for controlling user data, where the method is applied to a first server, and the method includes: receiving, by the first server, a second acquisition request sent by a first application, where the first application is installed in an electronic device; and sending, by the first server, size data and effect data of a first article to the first application.

With reference to the fifth aspect, in some embodiments, the second acquisition request carries identification information of the first application; and the first server sends the size data and the effect data of the first article to the first application after verification on the identification information of the first application succeeds.

According to a sixth non claimed aspect, this application provides a first server, including:
one or more processors and one or more memories; the one or more processors are coupled with the one or more processors, and the one or more memories are configured to store computer program code, where the computer program code includes a computer instruction, and when the one or more processors execute the computer instruction, the electronic device performs the method for controlling user data according to the fifth aspect.

According to a seventh non claimed aspect, this application provides a computer storage medium, including a computer instruction, and when run on an electronic device, the computer instruction enables the electronic device to perform the method for controlling user data according to the first aspect.

According to an eighth non claimed aspect, this application provides a computer program product including an instruction, where when run on a computer, the computer program product enables the computer to perform the method for controlling user data according to the first aspect.

In the implementation of this application, there is no need to provide the high-precision user data for the first application, and the 3D virtual try-on may be implemented by providing the high-precision user data for the second application. According to this application, in a 3D virtual try-on process, the high-precision user data may be ensured to be called only by the application trusted by the user, so that the high-precision user data is prevented from being leaked to the application untrusted by the user, and a risk of leaking the high-precision user data is reduced.

### BRIEF DESCRIPTION OF DRAWINGS

FIG. 1 is a schematic diagram of a try-on technology in the prior art;
FIG. 2 is a schematic structural diagram of an electronic device according to this application;
FIG. 3 is a schematic block diagram of software of an electronic device according to this application;
FIG. 4 is a schematic diagram of a scenario of acquiring user data through scanning according to this application;
FIG. 5 and FIG. 6a, FIG. 6b, and FIG. 6c are schematic diagrams of man-machine interaction according to this application;
FIG. 7 is a schematic flowchart of a method for controlling user data according to this application;
FIG. 8 is a schematic flowchart of another method for controlling user data according to this application; and
FIG. 9a, FIG. 9b, and FIG. 9c are schematic diagrams of man-machine interaction according to this application.

### DESCRIPTION OF EMBODIMENTS

The following describes the technical solutions in the embodiments of this application with reference to the accompanying drawings in the embodiments of this application.

In description of the embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in the embodiments of this application, "a plurality of" means two or more than two.

The following terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiment of this application, unless otherwise stated, "multiple" means two or more than two.

A method for controlling user data according to this application is applied to an electronic device. This application does not particularly limit a type of the mentioned electronic device, and the electronic device may be a portable electronic device such as a mobile phone, a tablet computer, a personal digital assistant (personal digital assistant, PDA), a wearable device, or a laptop (laptop), or a non-portable electronic device such as an electronic dressing mirror, or a desktop computer. An example of the electronic device includes but is not limited to an electronic device carrying an iOS system, an Android system, a Microsoft system, or another operating system.

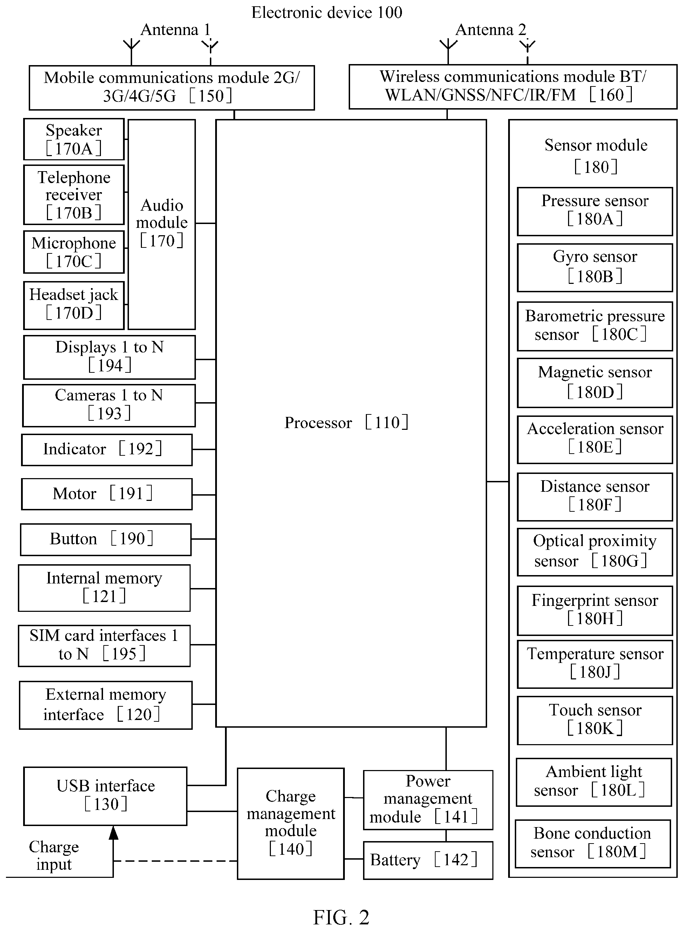

First, a structure of the electronic device in this application is described. FIG. 2 is a schematic structural diagram of an electronic device 100.

The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C. a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure described in this embodiment of the present invention does not constitute a particular limitation on the electronic device 100. In some other embodiments of this application, the electronic device 100 may include more or fewer components than those shown in the figure, or some components may be combined, or some components may be split, or a different component deployment may be used. The components shown in the figure may be implemented by using hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. The different processing units may be separate devices or may be integrated in one or more processors.

The controller may be a nerve center and a command center of the electronic device 100. The controller may generate an operation control signal based on instruction operation code and a time sequence signal, to finish controlling of fetching an instruction and executing the instruction.

A memory configured to store an instruction and data may also be disposed in the processor 110. The instruction stored in the memory is used for the electronic device 100 to perform the method for controlling user data according to the embodiments of this application. In some embodiments of this application, the data stored in the memory may include user data, and the user data include high-precision user data and low-precision user data. In some embodiments, the memory in the processor 110 is a cache. The memory may store an instruction or data that the processor 110 has just used or recycles. If the processor 110 needs to reuse the instruction or the data, the processor 110 may directly call the instruction or the data from the memory. Because repeated access is avoided, and waiting time of the processor 110 is reduced, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industrial processor interface (mobile industrial processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The I2C interface is a two-way synchronization serial bus, including a serial data line (serial data line, SDA) and a serial clock line (derail clock line, SCL). In some embodiments, the processor 110 may include a plurality of groups of I2C buses. The processor 110 may be coupled with a touch sensor 180K, a charger, a flash, a camera 193, and the like through different I2C bus interfaces respectively. For example, the processor 110 may be coupled with the touch sensor 180K through the I2C interface, so that the processor 110 communicates with the touch sensor 180K through the I2C bus interface, to implement a touch function of the electronic device 100.

The I2S interface may be used for audio communication.

The PCM interface may also be used for the audio communication, and be configured to sample, quantize and encode an analog signal.

The UART interface is a universal serial data bus for asynchronous communication.

The MIPI interface may be configured to connect the processor 110 to a peripheral device such as the display 194, the camera 193, or the like. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display 194 through the DSI interface, to implement a display function of the electronic device 100.

The GPIO interface may be configured through software. The GPIO interface may be configured as a control signal or as a data signal. In some embodiments, the CPIO interface may be configured to connect the processor 110 to the camera 193, the display 194, the wireless communications module 160, the audio module 170, the sensor module 180, and the like. The GPIO interface may further be configured as the I2C interface, the I2S interface, the UART interface, the MIPI interface, and the like.

The USB interface 130 is an interface conforming to a USB standard specification and may be specifically a Mini USB interface, a Micro USB interface, a USB Type C interface, or the like. The USB interface 130 may be configured to connect the charger to charge the electronic device 100, or to transmit data between the electronic device 100 and the peripheral device. The USB interface 130 may further be configured to: connect the headset, and play audio through the headset. The interface may further be configured to connect another electronic device, for example, an AR device, or the like.

It may be understood that the interface connection relationships between the modules shown in this embodiment of the present invention are only described as an example and do not construe a structural limitation on the electronic device 100. In some other embodiments of this application, the electronic device 100 may also use different interface connection manners in the foregoing embodiments, or a combination of a plurality of interface connection manners.

The charge management module 140 is configured to receive a charge input from the charger.

The power management module 141 is configured to connect the battery 142, the charge management module 140, and the processor 110.

A wireless communications function of the electronic device 100 may be implemented through the antenna 1, the antenna 2, the mobile communications module 150, the wireless communications module 160, the modem processor, the baseband processor, and the like.

In some embodiments, the electronic device 100 may use the wireless communications function to communicate with another device. For example, the electronic device 100 may communicate with the server 200 to acquire user data stored in the server 200, or a high-precision 3D body model or a low-precision 3D body model of the user stored in the server 200, and the like. For another example, the electronic device 100 may communicate with the server 300 to acquire commodity data stored in the server 300, or a 3D accurate model or a 3D liner model of the commodity stored in the server 300, and the like. A communication process between the electronic device and the server 200 and the server 300 may be described with reference to related descriptions of the subsequent embodiments, and details are not described herein.

The antenna 1 and the antenna 2 are configured to transmit and receive an electromagnetic wave signal. Each antenna in the electronic device 100 may be configured to cover a single communications band or a plurality of communications bands. Different antennas may also be multiplexed to improve antenna utilization. For example, the antenna 1 may be multiplexed into a diversity antenna of a wireless local area network. In some other embodiments, the antenna may be used in combination with a tuning switch.

The mobile communications module 150 may provide a solution that is applied to the electronic device 100 and that includes wireless communications such as 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, filter and amplify the received electromagnetic wave, and transmit the electromagnetic wave to the modem processor for demodulation. The mobile communication module 150 may also amplify a signal modulated by the modem processor and convert, by using the antenna 1, the signal into an electromagnetic wave for radiation. In some embodiments, at least some of function modules of the mobile communication module 150 may be disposed in the processor 110. In some embodiments, at least some of function modules of the mobile communication module 150 may be disposed in a same device as at least some of modules of the processor 110.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. The demodulator then transmits the low-frequency baseband signal obtained through demodulation to a baseband processor for processing. The low-frequency baseband signal is transmitted to the application processor after being processed by the baseband processor. The application processor outputs a sound signal through an audio device (not limited to the speaker 170A, the telephone receiver 170B, and the like), or displays an image or a video through the display 194. In some embodiments, the modem processor may be a separate device. In some other embodiments, the modem processor may be independent of the processor 110, and is disposed in a same device as the mobile communications module 150 and another function module.

The wireless communications module 160 may provide a solution that is applied to the electronic device 100 and that includes wireless communication such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and infrared (infrared, IR). The wireless communications module 160 may be one or more devices that integrate at least one communications processor module. The wireless communications module 160 receives an electromagnetic wave through the antenna 2, performs frequency modulation and filtering on an electromagnetic wave signal, and sends the processed signal to the processor 110. The wireless communications module 160 may also receive a to-be-sent signal from the processor 110, perform frequency modulation and amplification on the signal, and convert, by using the antenna 2, the signal into an electromagnetic wave for radiation.

In some embodiments, the antenna 1 of the electronic device 100 is coupled with the mobile communications module 150, and the antenna 2 is coupled with the wireless communications module 160, so that the electronic device 100 may communicate with a network and another device through a wireless communications technology. The wireless communications technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, and/or an IR technology. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function through the GPU, the display 194, the application processor, and the like. The GPU is an image processing microprocessor connected to the display 194 and the application processor. The GPU is configured to perform mathematical and geometric calculations, and graphics rendering. The processor 110 may include one or more GPUs that execute a program instruction to generate or change display information.

In some embodiments, the GPU may be configured to construct a liner 3D model by using size data of a commodity. For example, the GPU may construct the liner 3D model of the commodity by using the size data of the commodity. For a construction process of the liner 3D model of the commodity, refer to related descriptions of the subsequent embodiments.

In some embodiments, the GPU may be configured to use the high-precision user data to construct a high-precision 3D body model, and use the low-precision user data to construct a low-precision 3D body model. For a construction process of the high-precision 3D body model and the low-precision 3D body model, refer to related descriptions of the subsequent embodiments.

In some embodiments, the GPU may be configured to match the high-precision 3D body model of the user with 3D liner models respectively corresponding to different sizes of the commodity, to determine an optimal size of the commodity. For a process of determining the optimal size of the commodity, refer to related descriptions of the subsequent embodiments.

In some embodiments, the GPU may be configured to generate the 3D virtual try-on image. For example, for a process of generating the 3D virtual try-on image, refer to related descriptions of the subsequent embodiments.

In some embodiments, the GPU may be configured to superpose a 3D accurate model of the commodity and a real image of the user to generate an effect drawing. For a process of superposing the 3D accurate model of the commodity and the real image of the user to generate the effect drawing, refer to related descriptions of the subsequent embodiments.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include one or N displays 194, where N is a positive integer greater than 1.

In some embodiments, the display 194 may be configured to display all interfaces output by a system of the electronic device 100. For all the interfaces output by the electronic device 100, refer to related descriptions of the subsequent embodiments.

The electronic device 100 may implement a shooting function through the ISP, the camera 193, the video codec, the GPU, the display 194, the application processors, and the like.

The ISP is configured to process data fed back by the camera 193. For example, to take a picture, a shutter is opened, light is transmitted to a camera photosensitive element through a lens, an optical signal is converted into an electrical signal, and the camera photosensitive element transmits the electrical signal to the ISP for processing and conversion into an image visible to naked eyes. The ISP may further perform algorithm optimization on noise, brightness, and a skin color of the image. The ISP may further optimize parameters such as exposure, a color temperature, and the like of a shooting scenario. In some embodiments, the ISP may be disposed in the camera 193.

The camera 193 is configured to capture a static image or a video. An optical image of an object generated by the lens is projected onto the photosensitive element. The photosensitive element may be a charge-coupled device (charge coupled device, CDD) or a complementary metal-oxide-semiconductor (complementary metal-oxide-semiconductor, CMOS) phototransistor. The photosensitive element converts the optical signal into the electrical signal, and then transmits the electrical signal to the ISP that converts the electrical signal into a digital image signal. The ISP outputs the digital image signal to the DSP for processing. The DSP converts the digital image signal into an image signal in a standard format of RGB, YUV, and the like. In some embodiments, the electronic device 100 may include one or N cameras 193, where N is a positive integer greater than 1. In some embodiments, the camera 193 is configured to acquire the real image of the user.

The digital signal processor is configured to process a digital signal. In addition to the digital image signal, another digital signal may also be processed. For example, when the electronic device 100 selects a frequency channel number, the digital signal processor is configured to perform Fourier Transform or the like on frequency channel number energy.

The video codec is configured to compress or decompress a digital video. The electronic device 100 may support one or more video codecs. Therefore, the electronic device 100 may play or record a video in a plurality of coding formats, for example, a moving picture experts group (moving picture experts group, MPEG) 1, an MPEG2, an MPEG3, and an MPEG4.

The NPU is a neural network (neural-network, NN) computing processor, which may process input information rapidly by drawing on a biological neural network structure, for example, drawing on a transmission mode between neurons of human brain, and may also continuously perform self-learning. Application such as intelligent cognition, for example, image recognition, facial recognition, speech recognition, text understanding, and the like of the electronic device 100 may be implemented through the NPU.

The external memory interface 120 may be configured to connect an external memory card, such as a Micro SD card, to implement expansion of a storage capacity of the electronic device 100. The external memory card communicates with the processor 110 through the external memory interface 120, to implement a data storage function. For example, a file such as music or a video is stored in the external memory card.

The internal memory 121 may be configured to store computer-executable program code, where the executable program code includes an instruction. The processor 110 performs various functional applications and data processing of the electronic device 100 by running the instruction stored in the internal memory 121. The internal memory 121 may include a program storage area and a data storage area. For example, the program storage area may store an operating system, an application program required by at least one function (for example, a sound playing function, an image playing function, and the like), and the like. The data storage area may store data (for example, audio data, a phone book, and the like), and the like created during use of the electronic device 100. In addition, the internal memory 121 may include a high speed random access memory, and may also include a nonvolatile memory, such as at least one magnetic disk storage device, a flash storage device, and a universal flash storage (universal flash storage, UFS).

The electronic device 100 may implement an audio function through the audio module 170, the speaker 170A, the telephone receiver 170B, the microphone 170C, the headset jack 170D, the application processor, and the like. For example, the audio function includes music playing, recording, and the like.

The pressure sensor 180A is configured to sense a pressure signal, and may convert the pressure signal into an electrical signal. In some embodiments, the pressure sensor 180A may be disposed in the display 194. The gyro sensor 180B may be configured to determine a motion posture of the electronic device 100. The barometric pressure sensor 180C is configured to measure an atmospheric pressure.

The magnetic sensor 180D includes a Hall effect sensor.

The acceleration sensor 180E may detect a magnitude of acceleration of the electronic device 100 in all directions (usually three axes).

The distance sensor 180F is configured to measure a distance.

For example, the optical proximity sensor 180G may include a light emitting diode (LED) and an optical detector, such as a photodiode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed in the display 194. The touch sensor 180K and the display 194 form a touchscreen, which is also referred to as a "touch control screen". The touch sensor 180K is configured to detect a touch operation acting on or near the touch sensor 180K. The touch sensor may transmit the detected touch operation to the application processor, to determine a touch event type. A visual output related to the touch operation may be provided by the display 194. In some other embodiments, the touch sensor 180K may also be disposed on a surface of the electronic device 100, and has a different location from the display 194.

The bone conduction sensor 180M may acquire a vibration signal.

The button 190 includes a power button, a volume button, and the like. The button 190 may be a mechanical button, or a touch button.

The motor 191 may generate a vibrating alert.

The indicator 192 may be an indicator lamp that may be configured to indicate a charging status and a change in a battery level, or to indicate a message, a missed call, a notification, and the like.

The SIM card interface 195 is configured to connect a SIM card. The SIM card may come into contact with or separate from the electronic device 100 by being inserted into or unplugged from the SIM card interface 195. The electronic device 100 may support one or N SIM card interfaces, where N is a positive integer greater than 1. The SIM card interface 195 may support a Nano SIM card, a Micro SIM card, the SIM card, and the like. A plurality of cards may be inserted into a same SIM card interface 195 simultaneously. Types of the plurality of cards may be same or different. The SIM card interface 195 may also be compatible with different types of SIM cards. The SIM card interface 195 may also be compatible with the external memory card. The electronic device 100 interacts with a network through the SIM card, to implement functions such as call and data communication. In some embodiments, the electronic device 100 uses an eSIM, that is, the embedded SIM card. The eSIM card may be embedded in the electronic device 100, and cannot be separate from the electronic device 100. A software system of the electronic device 100 may use a layered architecture, an event-driven architecture, a micro-core architecture, a micro-service architecture, or a cloud architecture. In this embodiment of the present invention, the software structure of the electronic device 100 is described by using a hierarchical Android system as an example.

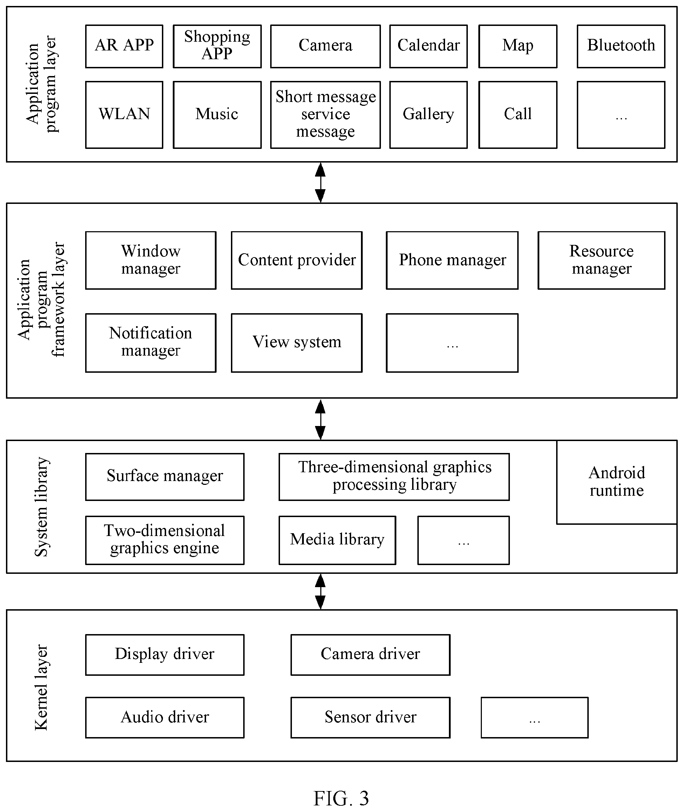

FIG. 3 is a structural block diagram of software of the electronic device 100 according to an embodiment of this application.

In a layered architecture, the software is divided into several layers, each with a clear role and division of labor. Communication among the layers is implemented through a software interface. In some embodiments, the Android system is divided into four layers, which are, from top to bottom, an application program layer, an application program framework layer, an Android runtime (Android runtime) and a system library, and a kernel layer respectively.

The application program layer may include a series of application program packages.

As shown in FIG. 3, the application program packages may include shopping applications (for example, Taobao APP, Jingdong APP, and Amazon APP), an application for managing user data (for example, AR APP), and application programs, such as a camera, a gallery, a calendar, a call, a map, a navigation, WLAN, Bluetooth, music, a video, and a short message service message.

The application program framework layer provides an application programming interface (application programming interface, API) and a programming framework for the application programs at the application program layer. The application program framework layer includes some predefined functions. In this application, the shopping applications may communicate with the application for managing user data through the API.

As shown in FIG. 3, the application program framework layer may include a window manager, a content provider, a view system, a phone manager, a resource manager, a notification manager, and the like.

The window manager is configured to manage a window program. The window manager may acquire a size of the display, determine whether there is a status bar, lock a screen, intercept a screen, and the like.

The content provider is configured to: store and acquire data and make the data accessible to the application. The data may include a video, an image, audio, calls dialed and answered, a browsing history and a bookmark, a phone book, and the like.

The view system includes a visual control, such as a control that displays text, and a control that displays a picture. The view system may be configured to construct an application program. A display interface is formed by one or a plurality of views. For example, a display interface that includes a short message service message notification icon may include a view that displays text and a view that displays a picture.

The phone manager is configured to provide a communication function of the electronic device 100, such as management of a call status (including completion, hanging up, and the like).

The resource manager provides an application program with various resources, such as a localized string, an icon, a picture, a layout file, and a video file.

The notification manager enables an application program to display notification information in the status bar, may be configured to convey a notification type message, may automatically disappear after a short stay, and does not need to interact with a user. For example, the notification manager is configured to: inform download completion, remind a message, and the like. The notification manager may also be a notification that appears, in a form of a chart or scroll bar text, in a top status bar of a system, such as a notification of an application program running in a background, or a notification that appears, in a form of a dialog window, on a screen. For example, text information is prompted in the status bar, a prompt tone is made, the electronic device vibrates, an indicator lamp flashes, and the like.

The Android Runtime includes a kernel library and a virtual machine. The Android runtime is responsible for scheduling and management of an Android system.

The kernel library includes two parts, where one part is a performance function that a java language needs to call, and the other part is the kernel library of the Android.

The application program layer and the application program framework layer run in the virtual machine. The virtual machine executes a java file of the application program layer and the application program framework layer into a binary file. The virtual machine is configured to perform functions, such as object lifecycle management, stack management, thread management, security and exception management, and garbage collection.

The system library may include a plurality of function modules, for example, a surface manager (surface manager), media libraries (Media Libraries), a three-dimensional graphics processing library (for example, OpenGL ES), a 2D graphics engine (for example, SGL), and the like.

The surface manager is configured to: manage a display subsystem, and provide fusion of 2D and 3D layers for a plurality of application programs.

The media libraries support playback and recording of a plurality of common audio and video formats, a static image file, and the like. The media libraries may support a plurality of audio-video encoding formats, such as MPEG4, H.264, MP3, AAC, AMR, JPG, and PNG.

The three-dimensional graphics processing library is configured to implement three-dimensional graphics drawing, image rendering, composition, layer processing, and the like.

In some embodiments, the three-dimensional graphics processing library is configured to construct a liner 3D model by using size data of a commodity.

In some embodiments, the three-dimensional graphics processing library may be configured to: use the high-precision user data to construct a high-precision 3D body model, and use the low-precision user data to construct a low-precision 3D body model.

In some embodiments, the three-dimensional graphics processing library may be configured to match the high-precision 3D body model of the user with 3D liner models respectively corresponding to different sizes of the commodity, to determine an optimal size of the commodity.

In some embodiments, the three-dimensional graphics processing library may be configured to generate the 3D virtual try-on image.

In some embodiments, the three-dimensional graphics processing library may be configured to superpose a 3D accurate model of the commodity and a real image of the user to generate an effect drawing.

The 2D graphics engine is a drawing engine of 2D drawing.

The kernel layer is a layer between hardware and software. The kernel layer includes at least a display driver, a camera driver, an audio driver, and a sensor driver.

It may be learned from FIG. 2 that the electronic device in this application is provided with a touch control screen (hereinafter referred to as a touchscreen), which may be configured to: receive a user operation and display interface content output by a system of the electronic device. The interface content may include an interface of a running application program, a system level menu, and the like, and the interface content may specifically include the following interface elements: input-type interface elements, such as a button (button), text (text), a scroll bar (scroll bar), and a menu (menu); and output-type interface elements, such as a window (window), and a label (label). In some embodiments, the interface content may be a 3D try-on image displayed to a user by the electronic device.

In the following embodiments, the method for controlling user data according to the embodiments of this application is described by using an example in which the electronic device is a mobile phone 100.

When the 3D virtual try-on is implemented, the method for controlling user data according to the embodiments of this application may ensure security of user data and/or commodity data, and reduce a risk of leaking the user data and loss of the commodity data.

To better understand the method for controlling user data according to the embodiments of this application, two types of data related to this application are first introduced: the user data and the commodity data.

### (1) User data

The user data includes data reflecting a user somatotype characteristic. For example, the data reflecting a user somatotype characteristic includes but is not limited to: the height, weight, chest circumference, waist circumference, hip circumference, arm width, arm length, arm circumference, thigh length, thigh circumference, calf length, calf circumference, head circumference, sizes and positions of all organs (mouth, eye, and nose) of the head, ankle circumference, foot length, foot width, foot arch height, instep height, lengths of all toes, and the like. In some embodiments, the user data may further include data reflecting a user external image. For example, the data reflecting a user external image includes but is not limited to: the hair style, hair color, face shape, skin color, and the like.

In some embodiments, the user data may be ranked based on a policy. Optionally, the user data may be ranked based on accuracy of reflecting the user somatotype characteristic. For example, the user data may be divided into high-precision user data and low-precision user data.

The high-precision user data refers to data that can accurately and fully reflect body details of the user. For example, for a foot of a user, high-precision foot data includes details of all parts of the foot, such as detailed three-dimensional data of the foot arch, toe positions, heel, ankle and instep; and for a whole body of the user, the high-precision user data may include detailed three-dimensional data of all parts of the user, such as the shoulder, arm, torso, thigh, and calf. In some embodiments, the high-precision user data is described and stored by using a standard description format of an existing 3D model, such as an OBJ file format. When the high-precision user data is described by using the standard description format of the 3D model, the high-precision user data may actually include information, such as a set of three-dimensional space coordinates of all vertexes of a body surface characteristic of the user and the quantity of faces, and the information may be used to construct the high-precision 3D model.

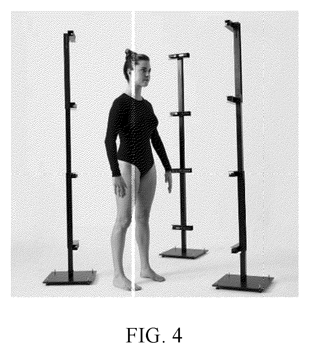

The high-precision user data may be collected in the following two manners:
1. The user body is scanned through a scanning device, and the high-precision user data is collected. The scanning device herein refers to a device that may acquire three-dimensional data of an object through scanning. The scanning device may be a mobile phone or another device (for example, an infrared scanner, a camera with depth measurement information, and the like). The scanning device may acquire accurate user data by scanning the user body. For example, FIG. 4 shows a possible scenario in which an external device scans the user body and collects the high-precision user data.
2. The high-precision user data is measured and provided by the user. Specifically, the user may acquire the user data through manual measurement. For example, the user may measure weight through a weight scale, measure a dimension of a body part through a tape, and the like.

The low-precision user data is relative to the high-precision user data, and can roughly and briefly reflect a body characteristic of the user, but cannot accurately and fully reflect body details of the user. That is, the low-precision user data may reflect a general contour of the user body, but does not include precise dimensions of all body parts. In some embodiments, a data volume included in the low-precision user data is less than a data volume included in the high-precision user data. For example, for the foot of the user, low-precision foot data includes contour data of all foot parts, such as the foot length, width, and height, but does not include detailed three-dimensional data, such as the foot arch height, toe positions, and ankle shape. In some embodiments, the low-precision user data is described and stored by using a standard description format of an existing 3D model, such as an OBJ file format.

The low-precision user data may be obtained after the high-precision user data is processed. Optionally, the low-precision user data may be obtained by fuzzifying the high-precision user data. For example, some data may be deleted from the high-precision user data to obtain the low-precision user data. For another example, when the high-precision user data is described by using the standard description format of the 3D model, a vertex with a vertex distance less than 1 cm in the high-precision user data may be deleted, smoothing is performed, and hundreds of thousands of faces in the high-precision user data are reduced to less than ten thousand faces.

A storage manner of the user data is described below.

The user data may be stored in the mobile phone 100, or stored in the server 200, and this is not limited herein. In some embodiments, the user data may be encrypted and stored in the mobile phone 100 (for example, stored in a cipher chip of the mobile phone 100) or in the server 200, and when the user data needs to be used, decryption or authentication is required, so that the security of the user data in the storage process may be ensured. When the user data is stored in the mobile phone 100, the user data may be stored in a storage file corresponding to an application installed in the mobile phone 100, or may be independently stored in the mobile phone 100 as a data source.

In some embodiments, the mobile phone 100 or the server 200 may hierarchically store the user data. Table 1 shows a possible form of hierarchically storing the user data. The user data is stored under a user account, that is, corresponding user data may be found through the user account. The user account is a string that may be one or any combination of the following: letters, numbers, symbols, and the like. For example, the user account may be a user name, mailbox, telephone number, and the like.

**Table 1**

| User account: user 1 | | |
|---|---|---|
| User data | User 1 | High-precision user data of the user 1 |
| | | Low-precision user data of the user 1 |

A specific operation when the mobile phone 100 or the server 200 hierarchically stores the user data is described below.

When the high-precision user data is collected in the foregoing first manner, the scanning device may transmit the collected high-precision user data to the mobile phone 100 or the server 200 for storage. When the high-precision user data is collected through the foregoing second manner, the user may directly enter the high-precision user data into the mobile phone 100 for storage, and may also transmit, through a terminal device (for example, the mobile phone 100 or a computer), the high-precision user data to the server 200 for storage. The low-precision user data may be obtained and stored after the mobile phone 100 or the server 200 processes the high-precision user data.

The high-precision user data can almost reflect detail characteristics of all parts of the user body, and an information amount is relatively large. Therefore, considering protection of personal data or personal privacy, the user usually hopes to ensure security of the high-precision user data. The low-precision user data can reflect only a general characteristic of the user body, the information amount is relatively small, and a security requirement of the user on the low-precision user data is also relatively low. To ensure data security, in some embodiments, after the user data is stored hierarchically, permission of calling the user data by another device or application may be set, and only another device or application with the permission can call the high-precision user data or the low-precision user data. Calling of the high-precision user data is stricter than calling of the low-precision user data.

In some embodiments, the high-precision user data can be called only by an application trusted by the user. The application trusted by the user refers to an application that does not leak the high-precision user data, or that does not use the high-precision user data to do things that damage user interests. For example, the high-precision user data is stored in a mobile phone manufacturer (for example, Huawei) or a server 200 cooperating with the mobile phone manufacturer, the server 200 may provide the high-precision user data to an application trusted by the user, and the application trusted by the user may include an application developed by the mobile phone manufacturer, such as an augmented reality (augmented reality, AR) application and a fast service intelligent platform of the mobile phone manufacturer. In the foregoing example, the high-precision user data is always called by the application trusted by the user, so that it can be ensured that the high-precision data is not leaked to another manufacturer or a third-party application (for example, a third-party shopping application such as Taobao or Jingdong). The application trusted by the user herein may be set by the user autonomously, or by the mobile phone 100 or the server 200.

Further, to ensure the security of the high-precision user data more effectively, when the high-precision user data is called each time, whether the high-precision user data can be called may be queried to the user, and the high-precision user data can be called only after being authorized by the user.

In some embodiments, the low-precision user data may be called by most applications. For example, applications that can call the low-precision user data include not only the foregoing application trusted by the user (for example, various types of applications developed by the mobile phone manufacturer), but also a third-party application (for example, a third-party shopping application such as Taobao or Jingdong). The application that can call the low-precision user data herein may be set by the user autonomously, or by the mobile phone 100 or the server 200.

Without being limited to the form of hierarchically storing the user data in the foregoing embodiments and Table 1, the user data may also be stored in another form in this application. For example, the user data may also be stored based on a body part classification (for example, body parts are divided into the head, upper torso, lower torso, foot, and the like), and high-precision user data and low-precision user data corresponding to each type of a body part may be stored separately.

Without being limited to storing user data of one user under one user account in Table 1, in this application, user data of a plurality of users may further be stored under one user account. For example, referring to the table 2, in addition to user data of a user 1, user data of a user 2 and a user 3 may also be included under the user account (that is, the user 1). The user 2 and the user 3 may be families of the user 1.

**Table 2**

| User account: user 1 | | |
|---|---|---|
| User data | User 1 | High-precision user data of the user 1 |
| | | Low-precision user data of the user 1 |
| | User 2 | High-precision user data of the user 2 |
| | | Low-precision user data of the user 2 |
| | User 3 | High-precision user data of the user 3 |
| | | Low-precision user data of the user 3 |

The high-precision user data may be used to construct a high-precision 3D body model of the user and implement accurate modeling of the user body. Specifically, a process of constructing the high-precision 3D body model of the user based on the high-precision user data may include: constructing the high-precision user data into the high-precision 3D body model through a modeling tool or algorithm. It may be understood that, in some embodiments, high-precision 3D models may also be constructed respectively for all body parts. For example, a high-precision 3D model of the head may be constructed based on high-precision user data of the head, a high-precision 3D model of the upper torso may be constructed based on high-precision user data of the upper torso, a high-precision 3D model of the lower torso may be constructed based on high-precision user data of the lower torso, a high-precision 3D model of the foot may be constructed based on high-precision user data of the foot, and the like.

The low-precision user data may be used to construct a low-precision 3D body model of the user and implement brief simulation of the user body. Specifically, a process of constructing the low-precision 3D body model of the user based on the low-precision user data may include: constructing the low-precision user data into the low-precision 3D body model through a modeling tool or algorithm. It may be understood that, in some embodiments, similar to the foregoing high-precision 3D model, low-precision 3D models may also be constructed respectively for all body parts.

### (2) Commodity data

The commodity data includes data reflecting a commodity characteristic.

The commodity in this application refers to an article that may be worn on a body of the user. The commodity in this application includes but is not limited to: clothing (for example, clothes (a T-shirt, a shirt, a coat, or the like), trousers (for example, long trousers, shorts, or the like), shoes and boots, ornaments (for example, a hat, glasses, a watch, an accessory (for example, a scarf, earrings, or the like), and the like. The commodity characteristic may include a size, a material, texture, decoration, and the like of the commodity.

For example, the commodity data of an article of clothes may include: a clothing length, a chest circumference, a waist circumference, a shoulder width, a sleeve length, a fabric material, a lining material, a cuff circumference, a downswing circumference, a fabric texture, a decoration on the fabric, fabric elasticity, a thickness, a cutting manner (such as shoulder slope drop or a shoulder pad), a style (close fitting, slim fitting, loose, or the like), and the like.

For another example, commodity data of a pair of shoes may include: a shoe size, a sole length, an inner height, a sole material, a toe style (tip, round head, or the like), a vamp material, a boot height, an insole material, an inner material of the vamp, a heel shape (a flat heel or a high heel), a boot surface material, a vamp pattern, and the like.

In some embodiments, the commodity data may be classified based on a policy. Optionally, the commodity data may be divided into size data and effect data. The size data and the effect data jointly constitute commodity data of a commodity.

The size data refers to data reflecting fitness when a user wears a commodity. For example, for an article of clothes, size data may include: the clothes length, chest circumference, waist circumference, shoulder width, sleeve length, cuff circumference, downswing circumference, and the like. For another example, for a pair of shoes, size data may include: the shoe size, sole length, inner height, boot height, and the like.

It may be understood that, for a commodity of a same style (for example, clothes, trousers, or the like of a same style), there may be a plurality of different sizes (for example, large, medium, small, and the like). Each size of a commodity of a same type corresponds to size data, that is, a commodity of a same type may have a plurality of pieces of size data.

The effect data refers to data that can reflect an effect of wearing a commodity by a user. For example, for an article of clothes, effect data may include: a fabric material, a lining material, a fabric texture, a decoration on the fabric, fabric elasticity, a thickness, a cutting manner (such as shoulder slope drop or a shoulder pad), a style (close fitting, slim fitting, loose, or the like), and the like. For another example, for a pair of shoes, effect data may include: a sole material, a toe style (tip, round head, or the like), a vamp material, an insole material, an inner material of the vamp, a boot surface material, a vamp pattern, and the like.

It may be understood that, for a commodity of a same style, there may be a plurality of pieces of different effect data. For example, a commodity of a same style may correspond to a plurality of colors, and each color corresponds to effect data. For another example, a commodity of a same style may correspond to a plurality of patterns, and each pattern corresponds to effect data.

The commodity data may be collected in the following two manners:
1. The commodity data is collected by taking a picture or scanning the commodity through a device. Herein, an image of a commodity may be taken by a camera, and the image is analyzed by a computer to collect commodity data. The commodity may also be scanned through a device such as an infrared scanner, and commodity data may be collected.
2. The commodity data is acquired through means of production of the commodity. Specifically, in a process of producing a commodity, a merchant has relevant means of production, and commodity data is recorded on the means of production. For example, during manufacturing of an article of clothing, data such as a size, a material, and a texture and a decoration of the clothes may be determined, and the data may be recorded in means of production of the clothes, and commodity data of the clothes may be acquired through the means of production.

A manner of storing the commodity data is described below.

The commodity data may be stored in the server 300. The server 300 may be a server of a merchant or a shopping platform (for example, Taobao, Jingdong, or the like).

In some embodiments, the server 300 may store the commodity data based on classification. Table 3 shows a possible form of storing the commodity data based on classification. The commodity data is stored under a commodity identifier, that is, corresponding commodity data may be found through a commodity identifier. The commodity identifier may be a commodity style number, a commodity description, and the like.

**Table 3**

| Commodity style number: S\|418105555 | | |
|---|---|---|
| Size data | Large | Clothing length: 112 cm, shoulder width: 58 cm, chest circumference: 120 cm, and sleeve length: 43 cm |
| | Medium | Clothing length: 110 cm, shoulder width: 57 cm, chest circumference: 116 cm, and sleeve length: 42 cm |
| | Small | Clothing length: 108 cm, shoulder width: 56 cm, chest circumference: 114 cm, and sleeve length: 41 cm |
| Effect data | Big pentagram pattern | Type: tight; elasticity: no elasticity; thickness: thin; fabric: cotton; pattern distribution: hem; and pattern: big pentagram |
| | Small pentagram pattern | Type: tight; elasticity: no elasticity; thickness: thin; fabric: cotton; pattern distribution: hem; and pattern: small pentagram |
| | Curve pattern | Type: tight; elasticity: no elasticity; thickness: thin; fabric: cotton; pattern distribution: hem; and pattern: curve |

In some embodiments, when the server 300 stores the commodity data based on classification, the commodity data may not be stored in the form in Table 3, but is described and stored by using a standard description format of an existing 3D model, such as an OBJ file format.

The size data reflects sizes of all parts of a commodity. In most cases, a merchant may expose the size data to a consumer, and make the consumer select a proper commodity. Therefore, the merchant has a relatively low security requirement on the size data. However, the effect data is a main difference between a commodity and another commodity. To improve competitiveness of a product, the merchant has a relatively high security requirement on the effect data. To ensure data security, in some embodiments, after the commodity data is stored based on classification, permission of calling the commodity data by another device or application may be set, and only another device or application with the permission can call the size data or the effect data. Therefore, calling of the effect data is stricter than calling of the size data.

In some embodiments, the effect data can be called only by an application trusted by the merchant. The application trusted by the merchant refers to an application that does not leak the effect data, or that does not use the effect data to do things that damage interests of the merchant. For example, the effect data is stored in the server 300 of a shopping application (for example, the Taobao APP), and the server 300 may provide the effect data to an application (for example, the Taobao APP) that has a collaborative relationship with the merchant. In the foregoing example, the effect data is called by an application trusted by the merchant, and this may ensure that the effect data is not leaked. The application trusted by the merchant herein may be set by the merchant or the server 300.

In some embodiments, the size data may be called by most applications. For example, an application that can call the size data includes not only the foregoing application (for example, the Taobao APP) trusted by the merchant, but also various types of applications developed by a mobile phone manufacturer or by a developer cooperating with the mobile phone manufacturer. The application that can call the size data herein may be set by the merchant or server 300.

It may be understood that, without being limited to commodity data of a commodity shown in Table 3, the server 300 may store commodity data of a plurality of commodities.

The size data may be used to construct a 3D liner model of the commodity and implement simulation of a commodity liner. One commodity may have a plurality of pieces of size data, so that one commodity may correspond to a plurality of liner 3D models. A process of constructing the 3D liner model of the commodity based on the size data may include: constructing the size data into the 3D liner model of the commodity through a modeling tool or algorithm.

The commodity data (including the size data and the effect data) may be used to construct a 3D accurate model of the commodity and implement accurate simulation on the commodity. The 3D accurate model of the commodity is constructed by the size data and the effect data jointly, and any piece of size data and any piece of effect data may be used to constitute a 3D accurate model of the commodity. That is, one commodity may correspond to a plurality of 3D accurate models. A process of constructing the 3D accurate model of the commodity based on the commodity data may include: constructing the commodity data into the 3D accurate model of the commodity through a modeling tool or algorithm. Specifically, when the commodity data is described by using a standard description format of an existing 3D model, the commodity data may be parsed through a modeling tool or algorithm, a 3D surface is generated through vertex and face description, material data is read, a surface texture is attached to the 3D surface, and for different materials, different illumination effects are rendered, and a 3D accurate model is obtained.

The method for controlling user data according to the embodiments of this application is described in detail below with reference to the accompanying drawings and application scenarios by using an example in which a user uses a 3D virtual try-on technology during online shopping.

In the method for controlling user data according to the embodiments of the application, the user data is divided into the high-precision user data and the low-precision user data, and the commodity data is divided into the size data and the effect data. The high-precision user data is provided only for an application trusted by the user, and the effect data of the commodity is provided only for an application trusted by the merchant. The application trusted by the user uses a high-precision 3D body model of the user to match liner 3D models corresponding to a plurality of sizes of the commodity, to obtain an optimal size. The application trusted by the merchant uses a 3D accurate model corresponding to the optimal size and the low-precision 3D body model of the user to display a 3D try-on effect for the user. When the 3D virtual try-on is implemented, security of the user data and/or the commodity data may be ensured, and a risk of leaking the user data and loss of the commodity data are reduced.

Application scenario 1: The user 1 selects a to-be-purchased commodity through a shopping application on the mobile phone 100, and views a 3D virtual try-on effect in the shopping application.

In the application scenario 1, user data is stored in the server 200, and the user data includes high-precision user data and low-precision user data. Commodity data is stored in the server 300, and the commodity data includes size data and effect data.

In the application scenario 1, the mobile phone 100 is installed with an application for managing the user data and a shopping application. The application for managing the user data is an application trusted by a user, that is, the application for managing the user data may call the high-precision user data and the low-precision user data in the server 200. The shopping application is an application trusted by the merchant, that is, the shopping application may call the size data and the effect data in the server 300. The application for managing the user data in the mobile phone 100 may be pre-installed or installed after the user downloads the application. The shopping application may be pre-installed or installed after the user downloads the shopping application.

The application for managing the user data and the shopping application may communicate with each other through an application programming interface (application programming interface, API). The following is described by using an example in which the application for managing the user data is the AR APP developed by the merchant.

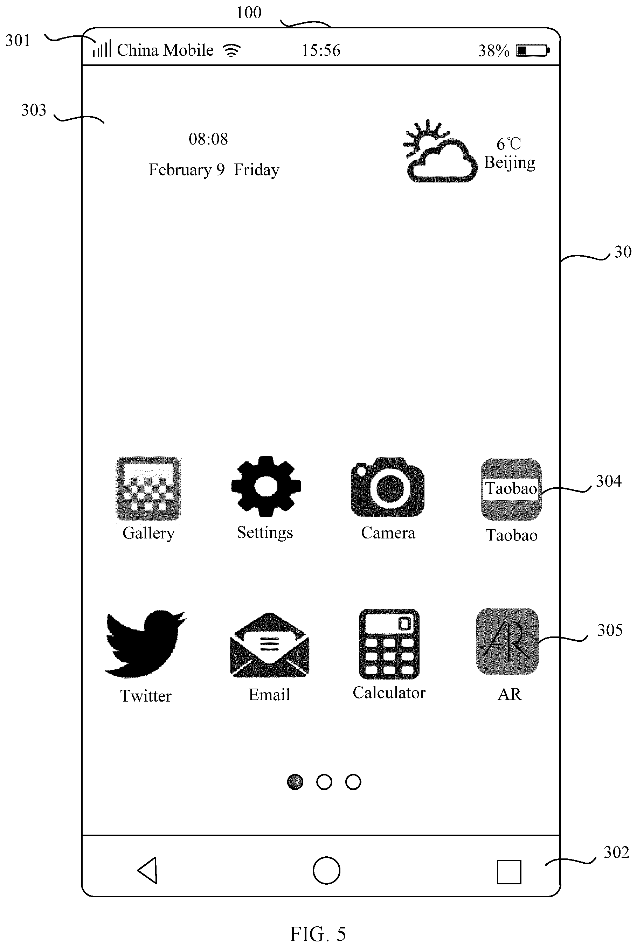

FIG. 5 is a user interface 30 displayed on a touchscreen of the mobile phone 100, and the user interface 30 may include: a status bar 301, a navigation bar 302 that can be hidden, a time and weather widget 303, and icons of a plurality of application programs such as an icon 304 of a shopping application Taobao APP and an icon 305 of the AR APP. The status bar 301 may include a name of a network operator (for example, China Mobile), a Wi-Fi icon, a signal strength, a current battery level, and the like. In some embodiments, the status bar 301 may also include a Bluetooth icon, an alarm clock icon, and the like. The navigation bar 302 may include a back key icon (a triangle in the drawing), a main screen icon (a circle in the drawing), and a multitasking key icon (a square in the drawing). When the mobile phone 100 detects a tap event of a finger or a stylus of the user for an application icon, in response to the tap event, the mobile phone 100 starts an application and displays a user interface corresponding to the application icon. When the mobile phone 100 detects that the finger of the user touches the icon 304 of Taobao, in response to the touch event, the mobile phone 100 starts the Taobao APP and displays a main interface of the Taobao APP.

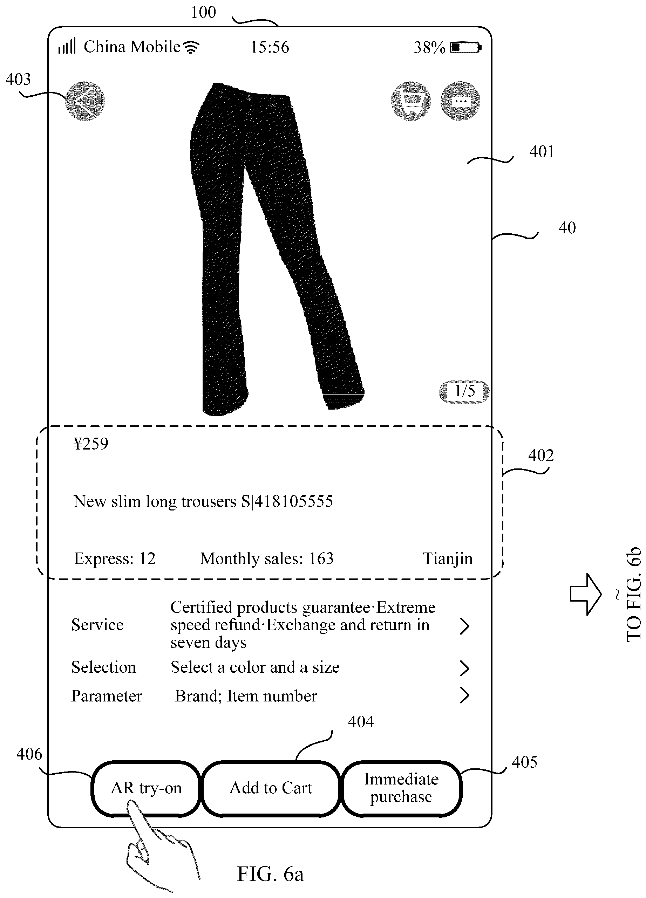

After starting the shopping APP, the user 1 may search for or select, in the shopping APP, a commodity that the user 1 wants to purchase or know. After the user 1 selects a commodity to be purchased or known, to enter a commodity details interface, an icon or a link of the commodity may be tapped. For example, a commodity selected by the user 1 is trousers, and a corresponding commodity details interface 40 may be shown as FIG. 6a. In the following descriptions, the trousers selected by the user 1 are referred to as trousers 400.

As shown in FIG. 6a, the commodity details interface 40 may include: a commodity presentation image 401, a commodity description 402, a back control 403, an Add to Cart control 404, an immediate purchase control 405, an AR try-on control 406, and the like. The commodity presentation image 401 may include a photo and a video of the commodity or a photo and a video when a model wears the commodity. The commodity description 402 is a simple description of the commodity and may include a price, a keyword (for example, a brand, a style, a popular element, and the like), a sales volume, a shipping origin, and the like. When the user 1 taps the back control 403, the mobile phone 100 returns to display a previous-level interface of the commodity details interface 40. When the user 1 taps the Add to Cart control 404, the mobile phone 100 may display a selection box of a commodity parameter (such as a size, a color, and a quantity) on the commodity details interface 40, and after the user selects the parameter, the mobile phone 100 may add the trousers 400 to a shopping cart corresponding to an account currently logged on to the shopping APP. When the user taps the immediate purchase control 405, the mobile phone 100 may display a selection box of a commodity parameter (such as a size, a color, and a quantity) on the commodity details interface 40, and after the user selects the parameter, the commodity details interface 40 jumps to a payment interface.

In addition to the foregoing elements and controls, the commodity details interface 40 may further include more content, such as a service viewing control, a commodity parameter selection control, and a commodity parameter viewing control. The user 1 may view a more detailed description of the commodity, user comments, and the like through a gesture that a finger flicks upwards on the commodity details interface 40. It may be understood that FIG. 6a is only an example, and elements and controls included in corresponding commodity details interfaces of different shopping APPs or different commodities, arrangement of the elements and controls, and the like may be different, and this is not limited herein.

If the user 1 wants to view a 3D try-on effect of the trousers 400, the AR try-on control 406 may be tapped by a finger or a stylus. With reference to the accompanying drawings, one possible data processing process after the user 1 taps the AR try-on control 406 is described below.

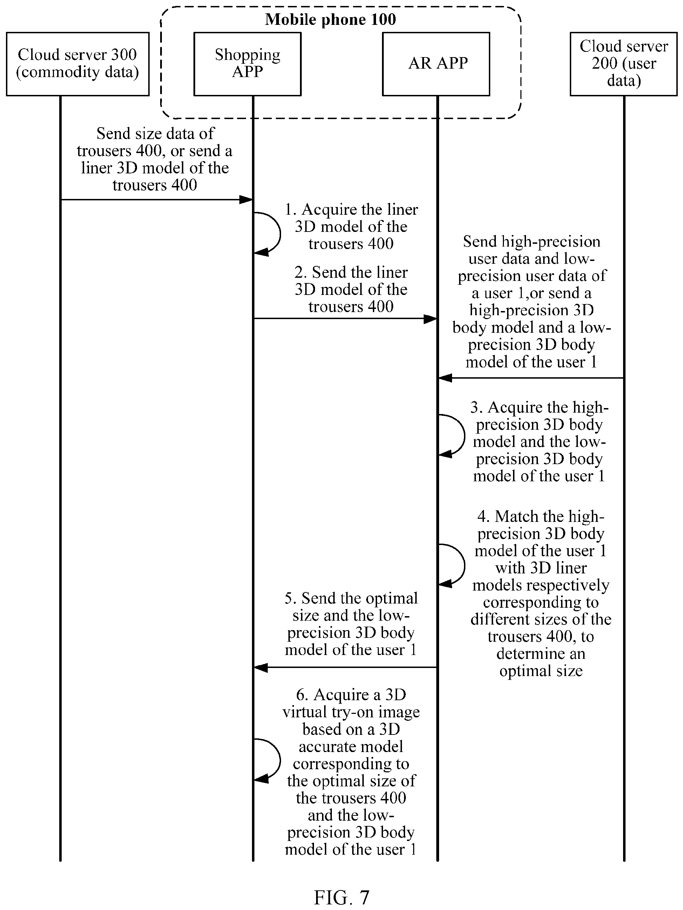

For example, FIG. 7 shows a possible data exchange between the mobile phone 100 and the server 200 and the server 300, and an internal data processing process of the mobile phone 100. As shown in FIG. 7, the data exchange and processing process may include the following steps.
1. The mobile phone 100 acquires a liner 3D model of the trousers 400 through the shopping APP.

Specifically, a cloud service 300 stores commodity data corresponding to the trousers 400. The commodity data corresponding to the trousers 400 herein may include: size data and effect data of the trousers 400. The server 300 and the shopping APP may communicate with each other through a network.

There may be the following two manners of acquiring the liner 3D model of the trousers 400 by the shopping APP.
(1) In some embodiments, the shopping APP may acquire the size data of the trousers 400 from the server 300 and use the size data of the trousers 400 to construct the liner 3D model of the trousers 400.

Specifically, after a tap event of the user on the AR try-on control 406 is detected, or when the commodity details interface 40 is entered, the mobile phone 100 may request the server 300 for the size data of the trousers 400 through the shopping APP. Optionally, after receiving the request sent by the shopping APP, the server 300 may verify whether the shopping APP has permission to call the commodity size data. After verifying that the shopping APP has the permission to call the commodity size data, the server 300 sends the size data of the trousers 400 to the shopping APP. In some embodiments, the server 300 may verify, based on the following manner, whether the shopping APP has the permission to call the commodity size data: The server 300 may store identifiers of all applications with permission to call the commodity data, the request sent by the shopping APP to the server 300 carries the identifier of the shopping APP, the server 300 checks whether the stored identifiers include the identifier of the shopping APP, and if the stored identifiers include the identifier of the shopping APP, it is determined that the shopping APP has the permission to call the commodity size data. The identifier of the application may be a name, an icon, code, and the like of the application.

Because the trousers 400 correspond to one or more sizes (for example, large, medium, and small), the trousers 400 may correspond to a plurality of pieces of size data. That is, the shopping APP may receive size data respectively corresponding to different sizes of the trousers 400, and construct liner 3D models respectively based on the plurality of pieces of size data of the trousers 400. The shopping APP may construct the 3D liner model of the trousers 400 by using a computer graphics processing capability of the mobile phone 100. For the specific steps of constructing the liner 3D model by the shopping APP by using the size data of the trousers 400, refer to a related description of the commodity data in the foregoing second point, and details are not described herein again.

(2) In some other embodiments, the shopping APP may acquire the liner 3D model of the trousers 400 from the server 300.

The server 300 may construct the liner 3D model based on the stored size data of the trousers 400. That is, the server 300 may store the liner 3D model of the trousers 400. For the specific steps of constructing the liner 3D model by the server 300, refer to a related description of the commodity data in the foregoing second point, and details are not described herein again.

After a tap event of the user on the AR try-on control 406 is detected, or when the commodity details interface 40 is entered, the mobile phone 100 may request the server 300 for the liner 3D model of the trousers 400 through the shopping APP. Optionally, because the liner 3D model of the trousers 400 reflects the size data of the trousers 400, after receiving the request sent by the shopping APP, the server 300 may verify whether the shopping APP has permission to call the commodity size data. After verifying that the shopping APP has the permission to call the commodity size data, the server 300 sends the liner 3D model of the trousers 400 to the shopping APP. For a process of verifying, by the server 300, whether the shopping APP has permission to call the commodity size data, refer to a related description in the foregoing first embodiment.

Because the trousers 400 correspond to one or more sizes (for example, large, medium, and small), the shopping APP may receive liner 3D models that respectively correspond to different sizes of the trousers 400 and that are sent by the cloud service 300.
2. The shopping APP sends the liner 3D model of the trousers 400 to an application for managing user data, namely, the AR APP.
3. The AR APP acquires a high-precision 3D body model and a low-precision 3D body model of a user who currently needs to virtually try on the trousers 400.

Specifically, the server 200 stores user data. In some embodiments, the user data may include user data of one user, for example, Table 1. In some embodiments, the user data may include user data of a plurality of users, for example, Table 2. The user data may include high-precision user data and low-precision user data. The server 200 and the AR APP may communicate with each other through a network.

A user who currently needs to virtually try on the trousers 400 may be determined through the following manners:
(1) The user who currently needs to virtually try on the trousers 400 is determined by default by the mobile phone 100.

Specifically, the AR APP usually manages user data through a user account, and a user account currently logged in to the AP APP of the mobile phone manufacturer may correspond to user data of one or more users. Refer to Table 1 and Table 2.

If there is only user data of one user under the user account currently logged in to the AR APP, the mobile phone 100 determines, by default, that a user who currently needs to virtually try on the trousers 400 is the user. For example, the user data stored under the user account currently logged in to the AR APP is shown in Table 1, and then the user who currently needs to virtually try on the trousers 400 is the user 1.

If there is user data of a plurality of users under the user account currently logged in to the AR APP, the mobile phone 100 may select, by default based on a policy, one of the plurality of users as the user who currently needs to virtually try on the trousers 400. For example, the mobile phone 100 may acquire storage time of a plurality of pieces of user data under the user account, and the user corresponding to the piece of user data with earliest storage time is used as the user who currently needs to virtually try on the trousers 400. For another example, the mobile phone 100 may use an owner of the mobile phone 100 (for example, the user 1) as the user who currently needs to virtually try on the trousers 400, and an owner identity of the user 1 may be added by the user 1 during user data management through the AR APP. For another example, the user 1 may preset a user (for example, mother of the user 1) to a default user that needs to virtually try on the trousers 400, and the mobile phone 100 may determine, based on the setting, the user (for example, the mother of the user 1) who currently needs to virtually try on the trousers 400.

(2) The user who currently needs to virtually try on the trousers 400 may be selected by the user 1.

In some embodiments, after the AR APP receives the liner 3D model that is of the trousers 400 and that is sent by the shopping APP, user identities of one or more users currently logged in to the user account of the AR APP may be acquired from a storage file of the AR APP or the server 200. The user identity may be a name, a nickname, a mobile phone number or a mailbox associated with the user account, or may be a profile picture used to identify the user.

The AR APP may display a plurality of acquired user identities under a user account currently logged in to the AR APP, and provide the user with an option or a control to select a user who currently needs to virtually try on the trousers 400.

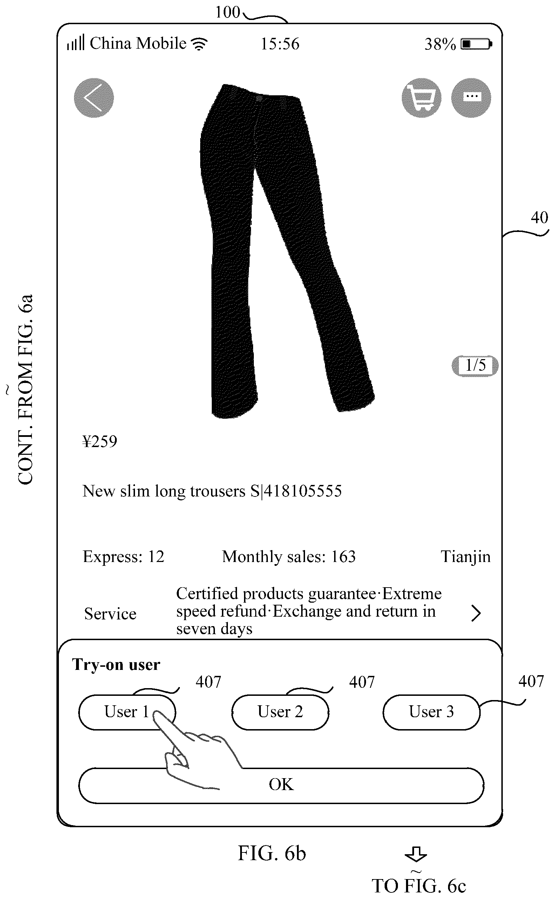

In a possible implementation, the AR APP may send acquired one or more user identities under the user account currently logged in to the AR APP to the shopping APP, which provides the user with an option or a control to select a user who currently needs to virtually try on the trousers 400. For example, referring to FIG. 6b, the mobile phone 100 may display, on the commodity details interface 40, a plurality of controls 407 for selecting a user who currently needs to virtually try on the trousers 400. The plurality of controls 407 display a plurality of user identities under the user account currently logged in to the AR APP.

Not limited to the manner in which the control 407 is displayed on the commodity details interface 40 shown in 6b, the control 407 may also be displayed in another manner. For example, the mobile phone 100 may also jump from the commodity details interface 40 to an interface dedicated to selecting a user who currently needs to virtually try on the trousers 400 and display a plurality of controls 407 on the interface. For another example, a display interface of the mobile phone 100 may also jump to a main interface of the AR APP, and provide a plurality of controls 407 on the main interface of the AR APP.

The user 1 may select, in the plurality of controls 407 provided by the mobile phone 100, a control corresponding to a user who currently needs to virtually try on the trousers 400, to determine the user who currently needs to virtually try on the trousers 400. As shown in FIG. 6b, the user 1 may tap a control corresponding to the user 1 to determine the user 1 as the user who currently needs to virtually try on the trousers 400. After the user 1 selects the user who currently needs to virtually try on the trousers 400, the mobile phone 100 may send the user identity of the user selected by the user 1 to the AR APP.

After a user who currently needs to virtually try on the trousers 400 is determined in either manner of the foregoing (1) or (2), the AR APP may acquire a high-precision 3D body model of the user. A process of acquiring, by the AR APP, a high-precision 3D body model of the user 1 is described in detail below by using an example in which the user who currently needs to virtually try on the trousers 400 is the user 1.

There may be the following two manners of acquiring, by the AR APP, the high-precision 3D body model of the user (that is, the user 1) who currently needs to virtually try on the trousers 400.
(1) In some embodiments, the AR APP may acquire user data (including high-precision user data and low-precision user data) of the user 1 from the server 200, construct a high-precision 3D body model by using the high-precision user data of the user 1, and construct a low-precision 3D body model by using the low-precision user data of the user 1.

Specifically, after the AR APP receives the liner 3D model that is of the trousers 400 and that is sent by the shopping APP, the AR APP may request the server 200 for the user data of the user 1. Optionally, the server 200 may verify whether the AR APP has the permission to call the user data, and after verifying that the AR APP has the permission to call the user data, send the user data of the user 1 to the AR APP. A process in which the server 200 verifies whether the AR APP has the permission to call the user data is similar to a process in which the server 300 verifies whether the shopping APP has the permission to call the commodity size data, and reference may be made to a related description.

After the AR APP receives the user data of the user 1, the high-precision 3D body model and the low-precision 3D body model of the user 1 may be constructed by using the computer graphics processing capability of the mobile phone 100. For the specific steps of constructing, by the AR APP, the high-precision 3D body model and the low-precision 3D body model of the user 1, refer to a related description of the user data in the foregoing first point, and details are not described herein again.

(2) In some other embodiments, the AR APP may acquire the high-precision 3D body model and the low-precision 3D body model of the user 1 from the server 200.

The server 200 may construct the high-precision 3D body model and the low-precision 3D body model of the user 1 based on the stored user data. For the specific steps of constructing, by the server 200, the high-precision 3D body model and the low-precision 3D body model of the user 1, refer to a related description of the user data in the foregoing first point, and details are not described herein again.

Specifically, after the AR APP receives the liner 3D model that is of the trousers 400 and that is sent by the shopping APP, the AR APP may request the server 200 for the high-precision 3D body model and the low-precision 3D body model of the user 1. Optionally, because the high-precision 3D body model of the user 1 reflects the high-precision user data of the user 1, and the low-precision 3D body model of the user 1 reflects the low-precision user data of the user 1, after receiving the request sent by the AR APP, the server 200 may verify whether the AR APP has the permission to call the user data. After verifying that the AR APP has the permission to call the user data, the server 200 sends the high-precision 3D body model and the low-precision 3D body model of the user 1 to the AR APP. A process in which the server 200 verifies whether the AR APP has the permission to call the user data is similar to a process in which the server 300 verifies whether the shopping APP has the permission to call the commodity size data, and reference may be made to a related description.

Without being limited to the acquisition manner described in the foregoing (1) or (2), this application may also acquire the high-precision 3D body model and the low-precision 3D body model of the user 1 in another manner. For example, in some embodiments, the AR APP may acquire the high-precision 3D body model of the user 1 from the server 200, and the low-precision 3D body model of the user 1 may be obtained after the high-precision 3D body model of the user 1 is fuzzified.

4. The AR APP matches the high-precision 3D body model of the user 1 with 3D liner models respectively corresponding to different sizes of the trousers 400, and determines an optimal size among a plurality of sizes of the trousers 400.

Specifically, a process of matching the high-precision 3D body model of the user 1 with the 3D liner model of the trousers 400 may specifically include: performing collision detection and pressure diagram simulation on the high-precision 3D body model of the user 1 and the 3D liner model of the trousers 400, to determine whether a figure of the user matches a size of the trousers. Two 3D models are simply superposed, and through the collision detection, whether clothes interfere with the user figure and the amount of interference may be obtained. A physical action engine such as gravity, and elasticity of a clothes material is increased, so that a pressure thermogram on the user body after the clothes are worn on the user may be simulated. When a pressure diagram matching the clothes is within a specific interval, a corresponding size may be considered to be a clothes size most suitable for the user. The specific interval may be obtained based on an experiment.

It may be understood that, the optimal size determined in step 4 is the size most suitable for the body of the user 1 among the plurality of sizes of the trousers 400.

In step 4, the high-precision 3D body model of the user 1 can accurately reflect details of body parts of the user 1. Therefore, the optimal size determined by using the high-precision 3D body model of the user 1 is the size most suitable for the body of the user 1.
5. The AR APP sends the determined optimal size and the low-precision 3D body model of the user 1 to the shopping APP.
6. The shopping APP acquires a 3D virtual try-on image based on the 3D accurate model corresponding to the optimal size of the trousers 400 and the low-precision 3D body model of the user 1.

Specifically, the 3D virtual try-on image may be generated by the shopping APP, or the 3D virtual try-on image may be generated by the server 300 and then sent to the shopping APP, and details are described below.
(1) The shopping APP uses a 3D accurate model corresponding to the optimal size of the trousers 400 and the low-precision 3D body model of the user 1 to generate the 3D virtual try-on image.

In the first manner, the low-precision 3D body model of the user 1 is sent to the shopping APP by the AR APP in step 5, and the 3D accurate model corresponding to the optimal size of the trousers 400 is determined by the shopping APP based on the optimal size sent by the AR APP in step 5. A process in which the shopping APP determines the 3D accurate model corresponding to the optimal size of the trousers 400 is described in detail below.

It may be understood that the 3D accurate model of the commodity is determined by both the size data and the effect data, and because the trousers 400 may correspond to one or more pieces of effect data, there may be one or more 3D accurate models corresponding to the optimal size of the trousers 400. For example, referring to Table 3, 3D accurate models corresponding to a large size of the commodity shown in the table include: a 3D accurate model constructed by the size data corresponding to the large size and the effect data corresponding to the big pentagram pattern, a 3D accurate model constructed by the size data corresponding to the large size and the effect data corresponding to the small pentagram pattern, and a 3D accurate model constructed by the size data corresponding to the large size and the effect data corresponding to the curve pattern.

Similar to acquiring the liner 3D model of the trousers 400 by the shopping APP in step 1, the 3D accurate model corresponding to the optimal size of the trousers 400 may also be acquired by the shopping APP in the following two manners:
(a) In some embodiments, the shopping APP may acquire size data corresponding to the optimal size of the trousers 400 and one or more pieces of effect data of the trousers 400 from the server 300, to construct a 3D accurate model corresponding to the optimal size of the trousers 400.

The size data corresponding to the optimal size of the trousers 400 may be acquired from the server 300 by the shopping APP in the first manner in step 1.

The one or more pieces of effect data of the trousers 400 may be acquired while the shopping APP acquires the size data from the server 300 in the first manner in step 1, or may be acquired from the server 300 after the shopping APP receives, in step 5, the optimal size sent by the AR APP. Optionally, the server 300 may verify whether the shopping APP has the permission to call the effect data of the commodity, and after verifying that the shopping APP has the permission to call the effect data of the commodity, the server 300 sends the one or more pieces of effect data of the trousers 400 to the shopping APP.

After the shopping APP acquires the size data corresponding to the optimal size of the trousers 400 and the one or more pieces of effect data of the trousers 400 from the server 300, one or more 3D accurate models corresponding to the optimal size of the trousers 400 may be constructed by using the computer graphics processing capability of the mobile phone 100. For the specific steps of constructing, by the shopping APP, the 3D accurate model corresponding to the optimal size of the trousers 400, refer to a related description of the commodity data in the foregoing second point, and details are not described herein again.

(b) In some other embodiments, the shopping APP may acquire the 3D accurate model corresponding to the optimal size of the trousers 400 from the server 300.

The server 300 may generate a plurality of 3D accurate models of the trousers 400 based on the stored one or more pieces of effect data of the trousers 400 and size data respectively corresponding to all sizes. That is, a plurality of 3D accurate models of the trousers 400 may be stored in the server 300. For the specific steps of constructing, by the server 300, the 3D accurate model of the trousers 400, refer to a related description of the commodity data in the foregoing second point, and details are not described herein again.

The shopping APP may request the server 300 for one or more 3D accurate models corresponding to the optimal size of the trousers 400. Optionally, the 3D accurate model of the trousers 400 reflects a size and an effect of the trousers 400, and after the server 300 receives a request of the shopping APP, the server 300 may verify that whether the shopping APP has the permission to call the size data and the effect data of the trousers 400. After verifying that the shopping APP has the permission to call the size data and the effect data of the trousers 400, the server 300 sends the 3D accurate model corresponding to the optimal size of trousers 400 to the shopping APP.

(2) The shopping APP sends the optimal size of the trousers 400 and the low-precision 3D body model of the user 1 to the server 300. The cloud service 300 uses the 3D accurate model corresponding to the optimal size of the trousers 400 and the low-precision 3D body model of the user 1 to generate the 3D virtual try-on image. The server 300 sends the generated 3D virtual try-on image to the shopping APP.

In the second manner, the server 300 may generate a plurality of 3D accurate models of the trousers 400 based on the stored one or more pieces of effect data of the trousers 400 and size data respectively corresponding to all sizes. That is, a plurality of 3D accurate models of the trousers 400 may be stored in the server 300. The server 300 may determine one or more 3D accurate models corresponding to the optimal size based on the optimal size sent by the shopping APP and send the one or more 3D accurate models to the shopping APP.

In the foregoing first or second manner, after the shopping APP or the server 300 acquires the 3D accurate model corresponding to the optimal size of the trousers 400, the 3D accurate model corresponding to the optimal size of the trousers 400 and the low-precision 3D body model of the user 1 may be used to generate the 3D virtual try-on image. Because there may be one or more 3D accurate models corresponding to the optimal size of trousers 400, there may also be one or more generated 3D virtual try-on images.

A process in which the shopping APP or the server 300 generates a 3D virtual try-on image by using the 3D accurate model and the low-precision 3D body model of the user 1 is described below by using a 3D accurate model corresponding to the optimal size of the trousers 400 as an example. The process may specifically include that the shopping APP calls the low-precision 3D body model of the user 1, superpose the 3D precision model of the trousers 400, and generate a try-on effect after superposition. The try-on effect may be static or dynamic.

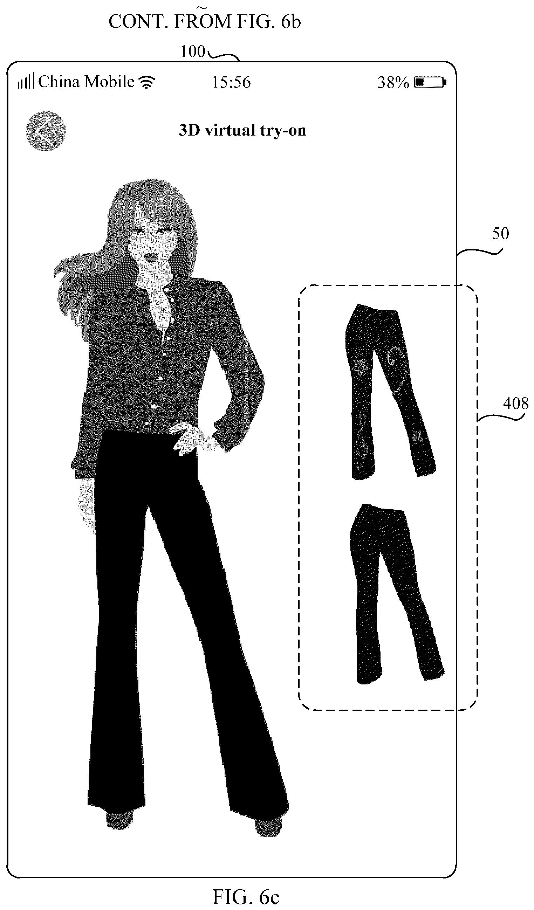

After the shopping APP acquires one or more 3D virtual try-on images in the foregoing first or second manner, the one or more 3D virtual try-on images may be displayed, so that a user views the try-on effect. For example, referring to FIG. 6c, after the shopping APP acquires the 3D virtual try-on image, the shopping APP may jump from the commodity details interface 40 to a 3D virtual try-on interface 50. The 3D virtual try-on interface 50 includes: a 3D virtual try-on image acquired by the shopping APP. The size corresponding to the 3D accurate model of the trousers 400 in the 3D virtual try-on image is the foregoing optimal size, and the effect corresponding to the 3D accurate model of the trousers 400 in the 3D virtual try-on image may be any one of a plurality of effects of the trousers 400.

In some embodiments, the 3D virtual try-on interface 50 may also include a control 408 for selecting the effect of the trousers 400. For example, as shown in FIG. 6c, the control 408 provides the user with an option of different patterns of the trousers 400. The user 1 may tap the control 408 to select a pattern on the trousers 400 that the user 1 wants to try on. After the mobile phone 100 detects a tap event of the user 1 on the control 408, a pattern of the trousers 400 that the user 1 currently wants to try on may be determined, and the 3D virtual try-on image in the 3D virtual try-on interface 50 is replaced with a 3D virtual try-on image corresponding to a user-selected pattern. The 3D virtual try-on image corresponding to the user-selected pattern is generated by using the 3D accurate model corresponding to the optimal size of the trousers 400 and the user-selected effect (that is, the user-selected pattern), and the low-precision 3D body model of the user 1.

In the application scenario 1, from tapping, by the user, the AR try-on control 406 in the commodity details interface 40 to displaying, by the shopping APP, the 3D virtual try-on image shown in FIG. 6c, there is data exchange between the mobile phone 100 and the server 200 and the server 300, and the data processing process is also performed inside the mobile phone 100. In some embodiments, for better user experience, after the user taps the AR try-on control 406 in the commodity details interface 40, and before the shopping APP displays the 3D virtual try-on image, a waiting icon may be displayed on the shopping APP interface. The waiting icon may be a buffer bar, an hourglass icon, or a circle with an arrow. The waiting icon may be static or dynamic.

In a solution shown in FIG. 7, in the 3D virtual try-on image finally displayed by the shopping APP, the 3D accurate model of the trousers 400 is obtained based on the optimal size and matches the user body. In addition, the 3D accurate model of the trousers 400 implements accurate simulation on the clothing, that is, the 3D virtual try-on image finally displayed by the shopping APP provides a real try-on effect for the user.

In the application scenario 1, there is no need to provide the high-precision user data to the shopping APP, and the 3D virtual try-on may be implemented by providing the high-precision user data to the AR APP, so that it can be ensured that the high-precision user data is called only by an application trusted by the user, and security of the high-precision user data is ensured, thereby protecting privacy of the user. Similarly, in the application scenario 1, there is no need to provide the effect data of the commodity to the AR APP, and the 3D virtual try-on may be implemented only by providing the effect data of the commodity to the shopping APP, so that it can be ensured that the effect data of the commodity is called only by an application trusted by the merchant, the security of the effect data of the commodity is ensured, and the interests of the merchant are protected.

In some embodiments, the high-precision 3D body model of the user 1 and the 3D liner models respectively corresponding to the different sizes of the trousers 400 may not be used for matching, and the high-precision user data of the user 1 and the size data respectively corresponding to the different sizes of the trousers 400 may be used for matching, to determine the optimal size of the trousers 400. Specifically, with reference to the embodiment of FIG. 7, in step 1, the shopping APP may acquire the size data respectively corresponding to the different sizes of the trousers 400, in step 3, the AR APP may acquire the high-precision user data of the user 1, and in step 4, the AR APP may match the high-precision user data of the user 1 with the size data respectively corresponding to the different sizes of the trousers 400, to determine the optimal size of the trousers 400. A process in which the AR APP matches the high-precision user data of the user 1 with the size data respectively corresponding to the different sizes of the trousers 400, to determine the optimal size of the trousers 400 may include: comparing the high-precision user data (key size data such as a shoulder width, an arm length, a chest circumference, a waist circumference, a hip circumference, a thigh circumference, a calf circumference, and a height) with the size data respectively corresponding to different sizes of different trousers 400 through a computer vision (computer vision, CV) algorithm, and the optimal size matching the user body may be acquired.

In the application scenario 1, the method for controlling user data according to the embodiments of this application is described by using an example in which the user virtually tries on the trousers. It may be understood that the method for controlling user data according to the embodiments of the application is not limited to the trousers, and may also be applied to a scenario in which another commodity is virtually worn on. For example, when a user wants to try on a commodity such as an upper outer garment, shoes, glasses, or a hat, a virtual try-on image may also be provided by using a method similar to the embodiment of FIG. 7, thereby protecting the privacy of the user and the interests of the merchant.

In some embodiments, to simplify the data exchange and the processing process, the user data may also be exchanged and processed based on a body part of the user when the user wears the commodity. For example, in the application scenario 1, when the user wants to try on clothes, in step 3 of FIG. 7, the AR APP may acquire a high-precision 3D body model and a low-precision 3D body model of an upper body torso of the user who currently needs to virtually try on the clothes. For another example, when the user wants to try on the shoes, in step 3 of FIG. 7, the AR APP may acquire a high-precision 3D body model and a low-precision 3D body model of the foot of the user who currently needs to virtually try on the shoes. For another example, when the user wants to try on the glasses, in step 3 of FIG. 7, the AR APP may acquire a high-precision 3D body model and a low-precision 3D body model of the head of the user who currently needs to virtually try on the glasses.

In some embodiments, in step 6 of FIG. 7, the shopping APP may not display, for the user, the 3D virtual try-on image generated by the 3D accurate model of the trousers 400 and the low-precision body model of the user 1, but may display, for the user, an effect drawing generated by superposing a real image of the user 1 and the 3D accurate model of the trousers 400. Details are described below.

Specifically, after the shopping APP receives the optimal size sent by the AR APP, in step 6, the mobile phone 100 may enable a camera (a front-facing camera or a rear-facing camera), and the real image of the user 1 is collected through the camera. The real image of the user 1 may be a photo or a video.

There may be one or more 3D accurate models corresponding to the optimal size of the trousers 400, and description is provided below by using any one of the 3D accurate models as an example.

In the foregoing embodiment, there may be the following two manners of acquiring, by the shopping APP, the effect drawing generated by superposing the real image of the user 1 and the 3D accurate model of the trousers 400.
(1) In a possible implementation, the shopping APP may superpose a 3D accurate model corresponding to the optimal size of the trousers 400 and the real image of the user 1, to generate the effect drawing. For the manner of acquiring, by the shopping APP, the 3D accurate model corresponding to the optimal size of the trousers 400, refer to a related description in the first point of the foregoing step 6.
(2) In another possible implementation, the mobile phone 100 may send the collected real image of the user 1 to the server 300, and the server 300 may superpose a 3D accurate model corresponding to the optimal size of the trousers 400 and the real image of the user 1 to generate an effect drawing, and then send the effect drawing to the shopping APP.

In the foregoing two possible implementations, a process in which the shopping APP or the server 300 superposes the 3D accurate model corresponding to the optimal size of the trousers 400 and the real image of the user 1, to generate the effect drawing may specifically include that: skeleton point information in the real image of the user 1 is parsed, and the Taobao APP superposes, based on a skeleton point identification result, the 3D accurate model that is of the trousers 400 and that is bound to skeleton points to corresponding human body skeleton point positions on a video stream, to present a try-on effect.

The 3D accurate model of the commodity and the real image of the user are superposed to generate the effect drawing in the foregoing manner, and when the user can lift hands, turn around, and lean to one side, the 3D accurate model of the trousers 400 may be superposed on the user body along with a change of the user body, so that good virtual try-on experience is provided for the user.

It may be understood that, in the application scenario 1, the method for controlling user data according to the embodiments of this application is described in the application scenario 1 by using an example in which a shopping application and an AR application are installed in the electronic device. In some embodiments, the shopping application and the AR application may also exchange data by sharing a data interface or sharing a data storage location when exchanging the data. In some embodiments, in the application scenario 1, a function of the shopping application may also be implemented by a webpage accessed by a browser installed in the electronic device, such as a webpage of a shopping website in the browser. In some embodiments, a function of the AR application may also be a system function or service integrated on the electronic device, and is not necessarily implemented by an application.

Scenario 2: The user 1 selects a to-be-purchased commodity through an application used to manage user data on the mobile phone 100, and views a 3D virtual try-on effect in the shopping application on the mobile phone 100.

Same as the application scenario 1, the user data in the application scenario 2 is stored in the server 200, and the commodity data is stored in the server 300, and reference may be made to a related description in the application scenario 1.

The mobile phone 100 is installed with an application for managing the user data and a shopping application. A difference between the application scenario 2 and the application scenario 1 lies in that the user 1 does not select a to-be-purchased commodity in the shopping application, but selects a to-be-purchased commodity in the application for managing the user data. Description is provided below by using an example in which the application for managing user data is the AR APP.

As compared with the application scenario 1, the AR APP may also implement content searching on an installed application of the mobile phone 100. Specifically, the AR APP may communicate with a fast service intelligent platform (for example, HUAWEI ability gallery (HUAWEI ability gallery, HAG) through a network, to implement the content searching on the installed application of the mobile phone 100 through the fast service intelligent platform. The fast service intelligent platform is a service distribution platform and may also be viewed as a server. The fast service intelligent platform may parse a user requirement and distribute the user requirement to a service partner matching the user requirement. After the service partner receives the user requirement, a result found based on the user requirement may be returned to the AR APP. The service partner herein may be an application installed in the mobile phone 100, for example, a shopping APP.

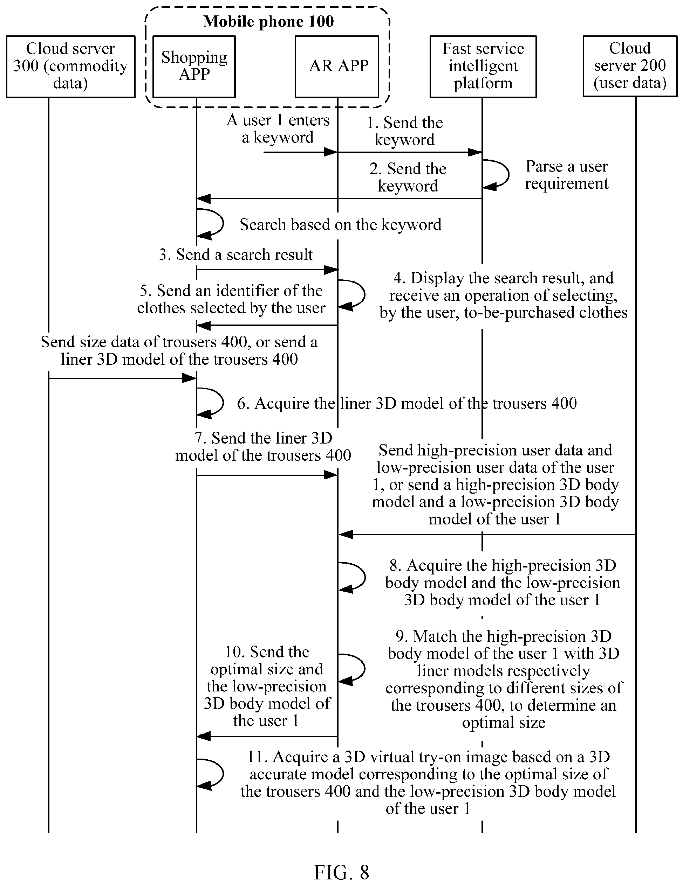

With reference to FIG. 8, possible data exchanges between the mobile phone 100 and the server 200, the server 300, and the fast intelligent platform, and the internal data processing process of mobile phone 100 are described below. As shown in FIG. 8, the data exchange and processing process may include the following steps.
1. The user 1 enters a keyword in the AR APP, and the AR APP sends the received keyword to the fast service intelligent platform.

Specifically, when the user wants to view a 3D try-on effect of a commodity, the AR APP in the mobile phone 100 may be opened first, and a keyword of the commodity is entered into the AR APP.

For example, referring to FIG. 5, the user 1 may tap the icon 305 of the AR APP on the user interface 30 with a finger or a stylus, and in response to the tap operation, the mobile phone 100 displays the main interface of the AR APP.

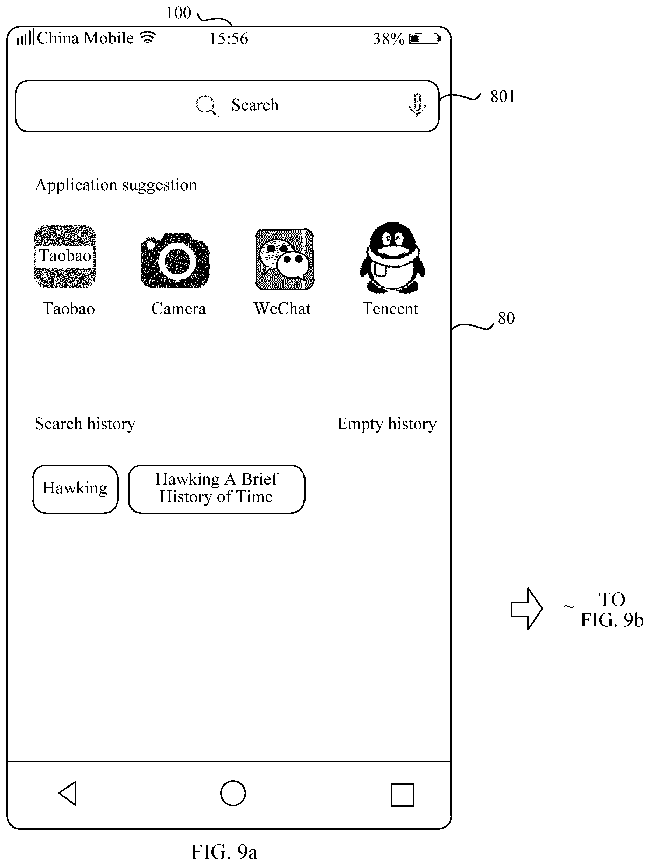

For example, FIG. 9a shows a possible main interface 80 of the AR APP. The main interface 80 of the AR APP may include: a search box 801. In some embodiments, the main interface 80 may further include an application suggested by the AR APP, a search history, and the like.

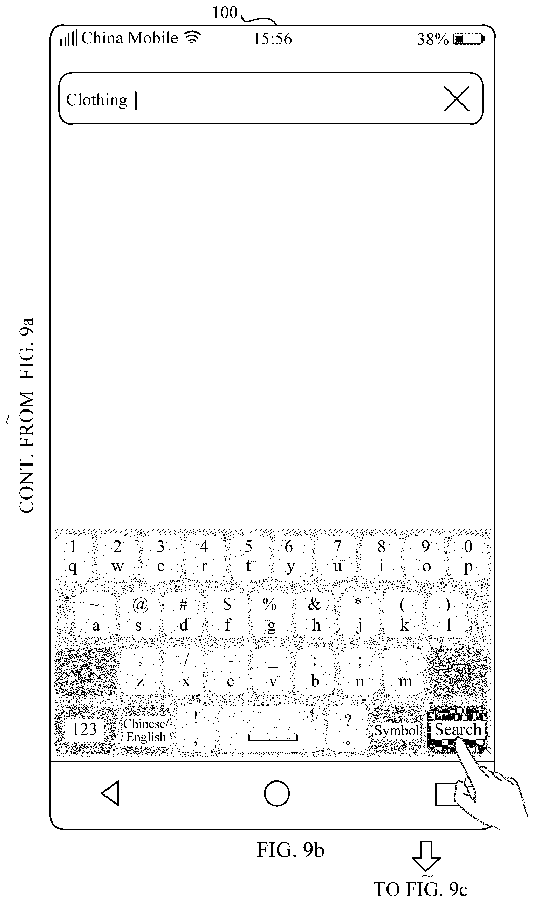

The user 1 may enter a keyword of a to-be-searched commodity in the search box 801. For example, referring to FIG. 9b, when the user 1 wants to purchase clothing, the user 1 may tap the search box 801, and enter the keyword through a virtual keyboard. After the user 1 enters the keyword, a search control in the virtual keyboard may be tapped. After the mobile phone 100 detects a tap operation of the user 1 on the search control in the virtual keyboard, a keyword "clothing" entered by the user 1 is sent to the fast service intelligent platform through the AR APP.

2. The fast service intelligent platform parses a user requirement based on the keyword and sends the keyword to a shopping APP matching a requirement of the user 1.

The fast service intelligent platform may analyze the user requirement based on the keyword, determine the application matching the user requirement among the installed applications of the mobile phone 100, and send the keyword to the application.

For example, if the keyword is "Hawking", the fast service intelligent platform may determine that the user wants to know a profile of Hawking, and the application matching the user requirement may be an application such as Wikipedia or Baidupedia.

For example, if keywords are "Hawking" and "A Brief History of Time", the fast service intelligent platform may determine that the user wants to view the book "A Brief History of Time", and the application matching the user requirement may be a reading-type application, such as Wechat Reading.

In step 2, when a keyword received by the fast service intelligent platform is "clothing", the fast service intelligent platform may determine that the user wants to purchase clothes, and the application matching the user requirement may be a shopping application, such as a shopping APP.

3. The shopping APP searches based on the keyword and sends a search result to the AR APP.

In some embodiments, the shopping APP may send the keyword to the server 300, acquire the search result from the server 300, and send the search result to the AR APP.
4. The AR APP displays the search result sent by the shopping APP, and the user 1 selects an article of to-be-purchased clothing in the search result.
5. The AR APP sends an identifier of the clothing selected by the user 1 to the shopping APP, and the mobile phone 100 jumps to the shopping APP and displays a commodity details interface of the clothing selected by the user 1. The clothing selected by the user is referred to as trousers 400 below.

The identifier of the clothing herein may be a type number, a textual description, or the like of the clothing. In step 4 and step 5, it may be considered that the AR APP provides a plurality of hyperlinks, each of which is connected to the commodity details interface of an article of clothing in the shopping APP. When the user selects an article of clothing, it is equivalent to jumping to a corresponding commodity details interface in the shopping APP through the hyperlink.

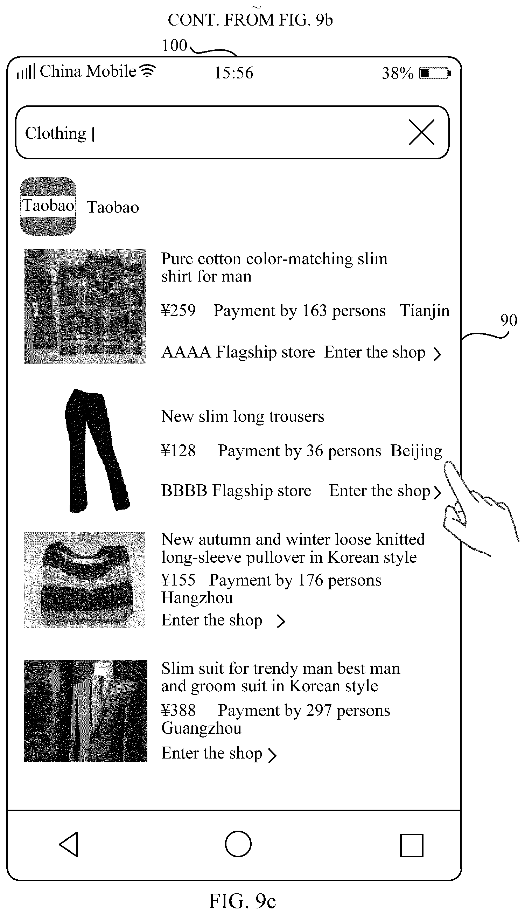

For example, FIG. 9c shows a possible interface 90 on which the AR APP displays the search result. As shown in FIG. 9c, the search result includes an image and a text introduction corresponding to a plurality of commodities found by the shopping APP based on the keyword.

The user 1 may tap the image or the text introduction of the trousers 400 in the search result of the interface 90, and in response to the tap operation of the user 1, the mobile phone 100 jumps to the shopping APP to display the commodity details interface of the trousers 400 in the shopping APP. For example, the commodity details interface may be shown FIG. 6a, and reference may be made to a related description.
6. The mobile phone 100 acquires the liner 3D model of the trousers 400 through the shopping APP.
7. The shopping APP sends the liner 3D model of the trousers 400 to an application for managing user data, namely, the AR APP.
8. The AR APP acquires the high-precision 3D body model and the low-precision 3D body model of the user who currently needs to virtually try on the trousers 400.
9. The AR APP matches the high-precision 3D body model of the user 1 with 3D liner models respectively corresponding to different sizes of the trousers 400, and determines an optimal size among a plurality of sizes of the trousers 400.
10. The AR APP sends the determined optimal size and the low-precision 3D body model of the user 1 to the shopping APP.
11. The shopping APP acquires a 3D virtual try-on image based on the 3D accurate model corresponding to the optimal size of the trousers 400 and the low-precision 3D body model of the user 1.

It may be understood that steps 6 to 11 are the same as steps 1 to 6 in the embodiment of FIG. 7, and reference may be made to a related description of the embodiment of FIG. 7, and details are not described herein again.

In the foregoing application scenario 1 and application scenario 2, the user data is stored in the server 200. In some embodiments, the user data may not be stored in the server 200, but in the mobile phone 100. The user data may be stored in a storage file corresponding to an application (for example, an AR APP) installed in the mobile phone 100 for managing the user data, or may be separately stored in the mobile phone 100 as a data source. When the user data is stored in the mobile phone 100, the application for managing the user data may acquire, based on the locally stored user data, the high-precision 3D body model and the low-precision 3D body model of the user who currently needs to virtually try on the trousers 400.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

In short, the foregoing descriptions are only embodiments of the technical solutions of the present invention, but are not intended to limit the protection scope of the present invention which is defined by the appended claims.

## Claims

1. A method for controlling user data, wherein the method is applied to an electronic device (100), the electronic device is installed with a first shopping application and a second application for managing user data, and the method comprises:
acquiring, by the second application, high-precision user data and low-precision user data of a user;
acquiring, by the second application, size data of a first article provided by the first application, wherein the size data reflects a size of the first article;
determining, by the second application, an optimal size of the first article based on the size data and the high-precision user data, wherein the optimal size matches a body of the user, the high-precision user data accurately and fully reflects a body detail of the user, and the low-precision user data roughly and briefly reflects a body contour of the user; and
providing, by the second application, the optimal size and the low-precision user data to the first application to generate a 3D try-on image;
wherein the acquiring, by the second application, high-precision user data and low-precision user data of the user comprises:
sending, by the second application, a first acquisition request to a second server (200), and receiving the high-precision user data and the low-precision user data of the user sent by the second server; and
wherein the first acquisition request carries identification information of the second application; and the high-precision user data and the low-precision user data of the user are sent by the second server after verification on the identification information of the second application succeeds;
wherein the 3D try-on image is generated based on the optimal size, the low-precision user data, and effect data of the first article; and the effect data of the first article is provided by the first application, and the effect data reflects a detail of the first article; and
wherein before the acquiring, by the second application, size data of a first article provided by the first application, the method further comprises:
sending, by the first application, a second acquisition request to a first server (300),
wherein the second acquisition request carries identification information of the first application; and after verification on the identification information of the first application succeeds, receiving, by the first application, the effect data of the first article sent by the first server, and wherein the high-precision user data is provided only to the second application, and the effect data is provided only to the first application.

2. The method according to claim 1, wherein the second application is an application developed by a mobile phone manufacturer, and the first application is a third-party application.

3. The method according to any one of claims 1 to 2, wherein before the acquiring, by the second application, size data of a first article provided by the first application, the method further comprises:
displaying, by the electronic device, an interface of the first application, wherein the interface comprises the first article; and
receiving, by the electronic device, an operation of selecting the first article by the user.

4. The method according to any one of claims 1 to 3, wherein the method further comprises:
displaying, by the electronic device, the generated 3D try-on image on the interface of the first application.

5. An electronic device (100), comprising a memory and a processor, wherein the memory stores at least one program, the at least one program comprises a first
shopping application and a second application for managing user data, and the processor is configured to run the second application to make the electronic device perform actions of:
acquiring high-precision user data and low-precision user data of a user;
acquiring size data of a first article provided by the first application, wherein the size data reflects a size of the first article;
determining an optimal size of the first article based on the size data and the high-precision user data, wherein the optimal size matches a body of the user, the high-precision user data accurately and fully reflects a body detail of the user, and the low-precision user data roughly and briefly reflects a body contour of the user; and
providing the optimal size and the low-precision user data to the first application to generate a 3D try-on image;
wherein that the processor runs the second application to make the electronic device acquire the high-precision user data and the low-precision user data of the user comprises:
the processor runs the second application to make the electronic device perform actions of:
sending a first acquisition request to a second server (200), and receiving the high-precision user data and the low-precision user data of the user sent by the second server; and
wherein the first acquisition request carries identification information of the second application; and the high-precision user data and the low-precision user data of the user are sent by the second server after verification on the identification information of the second application succeeds;
wherein the 3D try-on image is generated based on the optimal size, the low-precision user data, and effect data of the first article; and the effect data of the first article is provided by the first application, and the effect data reflects a detail of the first article;
wherein
before the processor runs the second application to make the electronic device acquire the size data of the first article provided by the first application, the processor is further configured to run the first application to make the electronic device perform actions of:
sending, by the first application, a second acquisition request to a first server (300),
wherein the second acquisition request carries identification information of the first application; and after verification on the identification information of the first application succeeds, receiving, by the first application, the size data and the effect data of the first article sent by the first server, and wherein the high-precision user data is provided only to the second application, and the effect data is provided only to the first application.

6. The electronic device according to claim 5, wherein the second application is an application developed by a mobile phone manufacturer, and the first application is a third-party application.

7. The electronic device according to any one of claims 5 to 6, wherein the electronic device further comprises a touchscreen, and
before the processor runs the second application to make the electronic device acquire the size data of the first article provided by the first application, the processor is further configured to run the first application to make the electronic device perform actions of:
displaying, by the touchscreen, an interface of the first application, wherein the interface comprises the first article; and
receiving, by the touchscreen, an operation of selecting the first article by the user.

## Patentansprüche

1. Verfahren zum Steuern von Benutzerdaten, wobei das Verfahren auf eine elektronische Vorrichtung (100) angewendet wird, auf der elektronischen Vorrichtung eine erste Einkaufsanwendung und eine zweite Anwendung zur Verwaltung von Benutzerdaten installiert sind und das Verfahren umfasst:
Erfassen, durch die zweite Anwendung, von Benutzerdaten mit hoher Präzision und Benutzerdaten mit geringer Präzision eines Benutzers;
Erfassen, durch die zweite Anwendung, von Größendaten eines ersten Artikels, die durch die erste Anwendung bereitgestellt werden, wobei die Größendaten eine Größe des ersten Artikels widerspiegeln;
Bestimmen, durch die zweite Anwendung, einer optimalen Größe des ersten Artikels basierend auf den Größendaten und den Benutzerdaten mit hoher Präzision, wobei die optimale Größe einem Körper des Benutzers entspricht, die Benutzerdaten mit hoher Präzision genau und vollständig ein Körperdetail des Benutzers widerspiegeln und die Benutzerdaten mit geringer Präzision näherungsweise und kurz eine Körperkontur des Benutzers widerspiegeln; und
Bereitstellen, durch die zweite Anwendung, der optimalen Größe und der Benutzerdaten mit geringer Präzision für die erste Anwendung, um ein 3D-Anprobebild zu erzeugen;
wobei das Erfassen, durch die zweite Anwendung, von Benutzerdaten mit hoher Präzision und Benutzerdaten mit geringer Präzision des Benutzers umfasst:
Senden, durch die zweite Anwendung, einer ersten Erfassungsanforderung an einen zweiten Server (200) und Empfangen der Benutzerdaten mit hoher Präzision und der Benutzerdaten mit geringer Präzision des Benutzers, die durch den zweiten Server gesendet werden; und
wobei die erste Erfassungsanforderung Identifikationsinformationen der zweiten Anwendung enthält; und die Benutzerdaten mit hoher Präzision und die Benutzerdaten mit geringer Präzision des Benutzers durch den zweiten Server gesendet werden, nachdem eine Verifizierung der Identifikationsinformationen der zweiten Anwendung erfolgreich erfolgt ist;
wobei das 3D-Anprobebild basierend auf der optimalen Größe, den Benutzerdaten mit geringer Präzision und den Effektdaten des ersten Artikels erzeugt wird; und die Effektdaten des ersten Artikels durch die erste Anwendung bereitgestellt werden und die Effektdaten ein Detail des ersten Artikels widerspiegeln; und
wobei vor dem Erfassen, durch die zweite Anwendung, der Größendaten eines ersten Artikels, die durch die erste Anwendung bereitgestellt werden, das Verfahren ferner umfasst:
Senden, durch die erste Anwendung, einer zweiten Erfassungsanforderung an einen ersten Server (300),
wobei die zweite Erfassungsanforderung Identifikationsinformationen der ersten Anwendung enthält; und,
nachdem eine Verifizierung der Identifikationsinformationen der ersten Anwendung erfolgreich erfolgt ist, Empfangen, durch die erste Anwendung, der durch den ersten Server gesendeten Effektdaten des ersten Artikels, und wobei die Benutzerdaten mit hoher Präzision nur für die zweite Anwendung bereitgestellt werden und die Effektdaten nur für die erste Anwendung bereitgestellt werden.

2. Verfahren nach Anspruch 1, wobei die zweite Anwendung eine Anwendung ist, die durch einen Mobiltelefonhersteller entwickelt wird, und die erste Anwendung eine Drittanbieteranwendung ist.

3. Verfahren nach einem der Ansprüche 1 bis 2, wobei vor dem Erfassen, durch die zweite Anwendung, der Größendaten eines ersten Artikels, die durch die erste Anwendung bereitgestellt werden, das Verfahren ferner umfasst:
Anzeigen, durch die elektronische Vorrichtung, einer Oberfläche der ersten Anwendung, wobei die Oberfläche den ersten Artikel umfasst; und
Empfangen, durch die elektronische Vorrichtung, eines Vorgangs zur Auswahl des ersten Artikels durch den Benutzer.

4. Verfahren nach einem der Ansprüche 1 bis 3, wobei das Verfahren ferner umfasst:
Anzeigen, durch die elektronische Vorrichtung, des erzeugten 3D-Anprobebilds auf der Oberfläche der ersten Anwendung.

5. Elektronische Vorrichtung (100), umfassend einen Speicher und einen Prozessor, wobei der Speicher mindestens ein Programm speichert, das mindestens eine Programm eine erste Einkaufsanwendung und eine zweite Anwendung zur Verwaltung von Benutzerdaten umfasst und der Prozessor so konfiguriert ist, dass er die zweite Anwendung ausführt, um die elektronische Vorrichtung zur Durchführung der folgenden Aktionen zu veranlassen:
Erfassen von Benutzerdaten mit hoher Präzision und Benutzerdaten mit geringer Präzision eines Benutzers;
Erfassen von Größendaten eines ersten Artikels, die durch die erste Anwendung bereitgestellt werden, wobei die Größendaten eine Größe des ersten Artikels widerspiegeln;
Bestimmen einer optimalen Größe des ersten Artikels basierend auf den Größendaten und den Benutzerdaten mit hoher Präzision, wobei die optimale Größe einem Körper des Benutzers entspricht, die Benutzerdaten mit hoher Präzision genau und vollständig ein Körperdetail des Benutzers widerspiegeln und die Benutzerdaten mit geringer Präzision näherungsweise und kurz eine Körperkontur des Benutzers widerspiegeln; und
Bereitstellen der optimalen Größe und der Benutzerdaten mit geringer Präzision für die erste Anwendung, um ein 3D-Anprobebild zu erzeugen;
wobei das Ausführen der zweiten Anwendung durch den Prozessor zum Veranlassen der Erfassung der Benutzerdaten mit hoher Präzision und der Benutzerdaten mit geringer Präzision des Benutzers durch die elektronische Vorrichtung umfasst, dass:
der Prozessor die zweite Anwendung ausführt, um die elektronische Vorrichtung zur Durchführung der folgenden Aktionen zu veranlassen:
Senden einer ersten Erfassungsanforderung an einen zweiten Server (200) und Empfangen der Benutzerdaten mit hoher Präzision und der Benutzerdaten mit geringer Präzision des Benutzers, die durch den zweiten Server gesendet werden; und
wobei die erste Erfassungsanforderung Identifikationsinformationen der zweiten Anwendung enthält; und
die Benutzerdaten mit hoher Präzision und die Benutzerdaten mit geringer Präzision des Benutzers durch den zweiten Server gesendet werden, nachdem eine Verifizierung der Identifikationsinformationen der zweiten Anwendung erfolgreich erfolgt ist;
wobei das 3D-Anprobebild basierend auf der optimalen Größe, den Benutzerdaten mit geringer Präzision und den Effektdaten des ersten Artikels erzeugt wird; und die Effektdaten des ersten Artikels durch die erste Anwendung bereitgestellt werden und die Effektdaten ein Detail des ersten Artikels widerspiegeln;
wobei
bevor der Prozessor die zweite Anwendung ausführt, um die elektronische Vorrichtung zur Erfassung der Größendaten des ersten Artikels zu veranlassen, die durch die erste Anwendung bereitgestellt werden, der Prozessor ferner so konfiguriert ist, dass er die erste Anwendung ausführt, um die elektronische Vorrichtung zur Durchführung der folgenden Aktionen zu veranlassen:
Senden, durch die erste Anwendung, einer zweiten Erfassungsanforderung an einen ersten Server (300),
wobei die zweite Erfassungsanforderung Identifikationsinformationen der ersten Anwendung enthält; und,
nachdem eine Verifizierung der Identifikationsinformationen der ersten Anwendung erfolgreich erfolgt ist, Empfangen, durch die erste Anwendung, der durch den ersten Server gesendeten Größendaten und Effektdaten des ersten Artikels, und wobei die Benutzerdaten mit hoher Präzision nur für die zweite Anwendung bereitgestellt werden und die Effektdaten nur für die erste Anwendung bereitgestellt werden.

6. Elektronische Vorrichtung nach Anspruch 5, wobei die zweite Anwendung eine Anwendung ist, die durch einen Mobiltelefonhersteller entwickelt wird, und die erste Anwendung eine Drittanbieteranwendung ist.

7. Elektronische Vorrichtung nach einem der Ansprüche 5 bis 6, wobei die elektronische Vorrichtung ferner einen Touchscreen umfasst, und
bevor der Prozessor die zweite Anwendung ausführt, um die elektronische Vorrichtung zur Erfassung der Größendaten des ersten Artikels zu veranlassen, die durch die erste Anwendung bereitgestellt werden, der Prozessor ferner so konfiguriert ist, dass er die erste Anwendung ausführt, um die elektronische Vorrichtung zur Durchführung der folgenden Aktionen zu veranlassen:
Anzeigen, durch den Touchscreen, einer Oberfläche der ersten Anwendung, wobei die Oberfläche den ersten Artikel umfasst; und
Empfangen, durch den Touchscreen, eines Vorgangs zur Auswahl des ersten Artikels durch den Benutzer.

## Revendications

1. Procédé de contrôle de données utilisateur, dans lequel le procédé est appliqué à un dispositif électronique (100), le dispositif électronique est équipé d'une première application d'achat et d'une seconde application de gestion de données utilisateur, et le procédé comprend :
l'acquisition, par la seconde application, de données utilisateur de haute précision et de données utilisateur de basse précision d'un utilisateur ;
l'acquisition, par la seconde application, de données de taille d'un premier article fournies par la première application, dans lequel les données de taille reflètent une taille du premier article ;
la détermination, par la seconde application, d'une taille optimale du premier article sur la base des données de taille et des données utilisateur de haute précision, dans lequel la taille optimale correspond au corps de l'utilisateur, les données utilisateur de haute précision reflètent fidèlement et intégralement un détail corporel de l'utilisateur, et les données utilisateur de faible précision reflètent approximativement et brièvement le contour corporel de l'utilisateur ; et
la fourniture, par la seconde application, de la taille optimale et des données utilisateur de faible précision à la première application pour générer une image d'essayage 3D ;
dans lequel l'acquisition, par la seconde application, de données utilisateur de haute précision et de données utilisateur de basse précision de l'utilisateur comprend :
l'envoi, par la seconde application, d'une première demande d'acquisition à un second serveur (200), et la réception des données utilisateur de haute précision et des données utilisateur de basse précision de l'utilisateur envoyées par le second serveur ; et
dans lequel la première demande d'acquisition contient des informations d'identification de la seconde application ; et les données utilisateur de haute précision et les données utilisateur de basse précision de l'utilisateur sont envoyées par le second serveur après vérification réussie des informations d'identification de la seconde application ;
dans lequel l'image d'essayage 3D est générée sur la base de la taille optimale, des données utilisateur de faible précision et de données d'effet du premier article ; et les données d'effet du premier article sont fournies par la première application, et les données d'effet reflètent un détail du premier article ; et
dans lequel, avant l'acquisition, par la seconde application, de données de taille d'un premier article fournies par la première application, le procédé comprend également :
l'envoi, par la première application, d'une seconde demande d'acquisition à un premier serveur (300),
dans lequel la seconde demande d'acquisition contient les informations d'identification de la première application ; et
après vérification réussie des informations d'identification de la première application, la réception, par la première application, des données d'effet du premier article envoyées par le premier serveur, et dans lequel les données utilisateur de haute précision sont fournies uniquement à la seconde application, et les données d'effet sont fournies uniquement à la première application.

2. Procédé selon la revendication 1, dans lequel la seconde application est une application développée par un fabricant de téléphones mobiles, et la première application est une application tierce.

3. Procédé selon l'une quelconque des revendications 1 et 2, dans lequel, avant l'acquisition, par la seconde application, de données de taille d'un premier article fournies par la première application, le procédé comprend également :
l'affichage, par le dispositif électronique, d'une interface de la première application, dans lequel l'interface comprend le premier article ; et
la réception, par le dispositif électronique, d'une opération de sélection du premier article par l'utilisateur.

4. Procédé selon l'une quelconque des revendications 1 à 3, dans lequel le procédé comprend également :
l'affichage, par le dispositif électronique, de l'image d'essayage 3D générée sur l'interface de la première application.

5. Dispositif électronique (100), comprenant une mémoire et un processeur, dans lequel la mémoire stocke au moins un programme, l'au moins un programme comprend une première application d'achat et une seconde application de gestion de données utilisateur, et le processeur est configuré pour exécuter la seconde application afin que le dispositif électronique réalise des actions :
d'acquisition de données utilisateur de haute précision et de données utilisateur de basse précision d'un utilisateur ;
d'acquisition de données de taille d'un premier article fournies par la première application, dans lequel les données de taille reflètent une taille du premier article ;
de détermination d'une taille optimale du premier article sur la base des données de taille et des données utilisateur de haute précision, dans lequel la taille optimale correspond au corps de l'utilisateur, les données utilisateur de haute précision reflètent fidèlement et intégralement un détail corporel de l'utilisateur, et les données utilisateur de faible précision reflètent approximativement et brièvement le contour corporel de l'utilisateur ; et
de fourniture de la taille optimale et des données utilisateur de faible précision à la première application pour générer une image d'essayage 3D ;
dans lequel le fait que le processeur exécute la seconde application pour permettre au dispositif électronique d'acquérir les données utilisateur de haute précision et les données utilisateur de basse précision de l'utilisateur comprend :
le processeur exécute la seconde application pour que le dispositif électronique réalise les actions :
d'envoi d'une première demande d'acquisition à un second serveur (200), et de réception des données utilisateur de haute précision et des données utilisateur de basse précision de l'utilisateur envoyées par le second serveur ; et
dans lequel la première demande d'acquisition contient des informations d'identification de la seconde application ; et les données utilisateur de haute précision et les données utilisateur de basse précision de l'utilisateur sont envoyées par le second serveur après vérification réussie des informations d'identification de la seconde application ;
dans lequel l'image d'essayage 3D est générée sur la base de la taille optimale, des données utilisateur de faible précision et de données d'effet du premier article ; et les données d'effet du premier article sont fournies par la première application, et les données d'effet reflètent un détail du premier article ; dans lequel
avant que le processeur n'exécute la seconde application pour permettre au dispositif électronique d'acquérir les données de taille du premier article fournies par la première application, le processeur est également configuré pour exécuter la première application afin que le dispositif électronique réalise les actions :
d'envoi, par la première application, d'une seconde demande d'acquisition à un premier serveur (300),
dans lequel la seconde demande d'acquisition contient les informations d'identification de la première application ; et
après vérification réussie des informations d'identification de la première application, de réception, par la première application des données de taille, des données d'effet du premier article envoyées par le premier serveur, et dans lequel les données utilisateur de haute précision sont fournies uniquement à la seconde application, et les données d'effet sont fournies uniquement à la première application.

6. Dispositif électronique selon la revendication 5, dans lequel la seconde application est une application développée par un fabricant de téléphones mobiles, et la première application est une application tierce.

7. Dispositif électronique selon l'une quelconque des revendications 5 et 6, dans lequel le dispositif électronique comprend également un écran tactile, et
avant que le processeur n'exécute la seconde application pour permettre au dispositif électronique d'acquérir les données de taille du premier article fournies par la première application, le processeur est également configuré pour exécuter la première application afin que le dispositif électronique réalise les actions :
d'affichage, par l'écran tactile, d'une interface de la première application, dans lequel l'interface comprend le premier article ; et
de réception, par l'écran tactile, d'une opération de sélection du premier article par l'utilisateur.
